# EUROPEAN PATENT APPLICATION

(11) **EP 3 270 042 A1**
(43) Date of publication of application: **17.01.2018**
(21) Application number: 17180050.1
(22) Date of filing: 06.07.2017
(51) Int. Cl.: F21S 41/125

(54) **CONTROL DEVICE MOUNTED ON VEHICLE AND METHOD FOR CONTROLLING THE SAME**

(30) Priority: 08.07.2016 KR 20160086960
(71) Applicant: LG Electronics Inc., Yeongdeungpo-Gu Seoul 07336 (KR)
(72) Inventor: LEE, Hyeongjun, Seoul 06772 (KR); KIM, Geunhyeong, Seoul 06772 (KR)
(74) Representative: Katérle, Axel

(57) **Abstract**

There are provided a control device (100) mounted in a vehicle (700) and a method for controlling the same. A control device (100) includes a sensing unit (160) configured to a peripheral environment of a vehicle, a head lamp (155) formed to output light of at least one color among a plurality of colors, and a processor (170) configured to control the head lamp (155) to output light of a preset color, based on the peripheral environment detected through the sensing unit (160).

## Description

### BACKGROUND OF THE INVENTION

### 1. Field of the Invention

The present disclosure relates to a control device mounted on a vehicle and a method for controlling the vehicle.

### 2. Description of the Conventional Art

Vehicle is a device for allowing a user aboard to move it in his or her desired direction. An automobile is taken as a representative example.

Various types of lamps may be provided in a vehicle. In general, a vehicle may include various automotive lamps having a lighting function for easily checking an object located in the vicinity of the vehicle while driving at night and a signalling function for notifying the driving status of his or her own vehicle to other vehicles or other road users.

For example, an apparatus operated in a direct illumination method using a lamp, such as a headlamp for irradiating light in a forward direction to secure a driver's vision, a brake lamp turned on when stepping on a brake, a turn signal lamp used when turning left of right, may be provided on a vehicle.

For another example, a reflector or the like for reflecting light to allow his or her own vehicle to be easily recognized from an outside may be mounted at a front or rear side of the vehicle.

The installation standards and specifications of such automotive lamps are specified in the regulations to sufficiently exhibit each function.

On the other hand, in recent years, as the development of a advance driving assist system (ADAS) has been actively carried out, the necessity of technological development capable of maximizing user convenience and safety while driving a vehicle has been recognized.

As part of this, the development of technologies capable of controlling lamps to maximize the convenience of vehicle driving is required.

### SUMMARY OF THE INVENTION

Therefore, an aspect of the detailed description is to provide a control device mounted on a vehicle and a method for controlling the vehicle, which can control a lamp provided in the vehicle using an optimized method.

Another aspect of the detailed description is to provide a control device mounted on a vehicle and a method for controlling the vehicle, which can control a head lamp using an optimized method in association with set route information.

To achieve these and other advantages and in accordance with the purpose of this specification, as embodied and broadly described herein, a control device mounted on a vehicle includes: a sensing unit configured to a peripheral environment of a vehicle; a head lamp formed to output light of at least one color among a plurality of colors; and a processor configured to control the head lamp to output light of a preset color, based on the peripheral environment detected through the sensing unit.

In one exemplary embodiment, the head lamp may include a plurality of light sources. The plurality of light sources may output lights of colors different from one another. The processor may control at least one of the plurality of light sources to output the light of the preset color, based on the detected peripheral environment.

In one exemplary embodiment, the head lamp may further include a color filter formed to allow only light having a specific wavelength or light having a wavelength in a specific range to be transmitted therethrough. The processor may output the light of the preset color using the color filter.

In one exemplary embodiment, the processor may output the light of the preset color by controlling the color temperature of a light source provided in the head lamp.

In one exemplary embodiment, the processor, if the peripheral environment detected through the sensing unit corresponds to a first condition, may control the head lamp to output light of a first color associated with the first condition, and, if the peripheral environment detected through the sensing unit corresponds to a second condition different from the first condition, control the head lamp to output light of a second color associated with the second condition.

In one exemplary embodiment, the first color and the second color may be colors different from each other. The processor may output the light of the first color or the light of the second color by using at least one of the plurality of light sources and the color filter, which are provided in the head lamp, or by controlling the color temperature of the light source.

In one exemplary embodiment, the processor may output lights of different colors, based on a kind of a road surface onto which the light is irradiated, which is detected through the sensing unit.

In one exemplary embodiment, the processor, if the kind of the road surface is detected as a first kind, may control the head lamp to output light of a first color associated with the first kind, and, if the kind of the road surface is detected as a second kind different from the first kind, control the head lamp to output light of a second color associated with the second kind.

In one exemplary embodiment, the processor may detect a weather state through the sensing unit, and determine a color of light output from the head lamp, based on the weather state.

In one exemplary embodiment, the processor may control the head lamp to output lights of different colors, based on a color of a line detected on a road surface on which the vehicle travels.

In one exemplary embodiment, the head lamp may include a plurality of light modules. The processor may determine colors of lights output from the plurality of light modules, based on conditions detected in regions onto which the lights output from the plurality of light modules are irradiated.

In one exemplary embodiment, the processor, if different conditions are detected in the regions, may control the head lamp such that the plurality of light modules output lights of different colors.

In one exemplary embodiment, the processor, if a first condition is detected in a first region among the regions, may control a light module irradiating light onto the first region among the plurality of light modules to output light of a first color associated with the first condition, and, if a second condition different from the first condition is detected in a second region different the first region among the regions, control a light module irradiating light onto the second region among the plurality of light modules to output light of a second color associated with the second condition.

In one exemplary embodiment, the processor, when different conditions are detected in a region onto which the light output from the head lamp is irradiated, may control the head lamp such that lights of colors corresponding to the conditions are irradiated onto regions in which the conditions are detected, respectively.

In one exemplary embodiment, the processor may detect a kind of a light source existing around the vehicle through the sensing unit, and determine a color of the light output from the head lamp, based on the detected kind of the light source.

In one exemplary embodiment, the processor changes a color of light, based on a user request.

To achieve these and other advantages and in accordance with the purpose of this specification, as embodied and broadly described herein, a vehicle includes the control device described above.

To achieve these and other advantages and in accordance with the purpose of this specification, as embodied and broadly described herein, a method for controlling a vehicle (or control device) includes: detecting a peripheral environment of the vehicle; and controlling a head lamp to output light of a preset color, based on the detected peripheral environment.

In one exemplary embodiment, the head lamp may include at least one of a plurality of light sources outputting lights of different colors and a color filter formed allow only light having a specific wavelength or light having a wavelength in a specific range. The controlling of the head lamp may include outputting the light of the preset color by using at least one of the plurality of light sources and the color filter, which are provided in the head lamp, or by controlling the color temperature of a light source provided in the head lamp.

In one exemplary embodiment, the controlling of the head lamp may include: if the detected peripheral environment corresponds to a first condition, controlling the head lamp to output light of a first color associated with the first condition; and if the detected peripheral environment corresponds to a second condition different from the first condition, controlling the head lamp to output light of a second color associated with the second condition.

Detailed items of the other exemplary embodiments are included in detailed description and drawings.

The present disclosure has advantages as follows.

First, the present disclosure can provide a control device and a vehicle having the same, which can output light of a color optimized based on a peripheral environment detected around the vehicle.

Second, the present disclosure can provide a head lamp capable of outputting lights of various colors.

Third, the present disclosure can provide a new user interface which can remarkably improve visibility of a driver by outputting light of a color associated with a detected peripheral environment (condition).

Advantages of the present disclosure are not limited to the aforementioned advantages, and those skilled in the art may evidently understand other advantages that have not been mentioned above from the description of the appended claims.

Further scope of applicability of the present application will become more apparent from the detailed description given hereinafter. However, it should be understood that the detailed description and specific examples, while indicating exemplary embodiments of the invention, are given by way of illustration only, since various changes and modifications within the spirit and scope of the invention will become apparent to those skilled in the art from the detailed description.

### BRIEF DESCRIPTION OF THE DRAWING

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a view illustrating an external appearance of a vehicle according to an exemplary embodiment;
FIGS. 2A to 2C are views illustrating various exemplary embodiments of a camera module included in a control device according to an exemplary embodiment;
FIG. 3 is a block diagram illustrating a vehicle according to the exemplary embodiment;
FIG. 4 is a block diagram illustrating a control device according to an exemplary embodiment;
FIG. 5 is a conceptual view illustrating a head lamp provided in the vehicle according to an exemplary embodiment;
FIGS. 6A to 6F illustrate various structures of the head lamp according to the present disclosure, which are exemplary views illustrating structures of a section taken along line A-A of the head lamp;
FIGS. 7A to 7D are conceptual views illustrating structures in which the head lamp according to the present disclosure outputs lights of various colors;
FIG. 8 is a flowchart illustrating a representative control method of the present disclosure; and
FIGS. 9 to 15 are conceptual views illustrating methods for controlling the head lamp according to various exemplary embodiments.

### DETAILED DESCRIPTION OF EXEMPLARY EMBODIMENTS

Description will now be given in detail according to the exemplary embodiments disclosed herein, with reference to the accompanying drawings. For the sake of brief description with reference to the drawings, the same or equivalent components will be provided with the same reference numbers, and description thereof will not be repeated. A suffix "module" and "unit" used for constituent elements disclosed in the following description is merely intended for easy description of the specification, and the suffix itself does not give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that, although the terms first, second, etc. may be used herein to describe various elements, these elements should not be limited by these terms. These terms are only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation as far as it represents a definitely different meaning from the context.

Terms "include" or "has" used herein should be understood that they are intended to indicate the existence of a feature, a number, a step, a constituent element, a component or a combination thereof disclosed in the specification, and it may also be understood that the existence or additional possibility of one or more other features, numbers, steps, constituent elements, components or combinations thereof are not excluded in advance.

A vehicle according to an embodiment of the present disclosure may have a concept including an automobile, a motorcycle, and the like. Hereinafter, the vehicle will be described as an automobile.

A vehicle according to an embodiment of the present disclosure may have a concept including an internal combustion engine vehicle having an engine as a power source, a hybrid vehicle having an engine and an electric motor as a power source, an electric vehicle having an electric motor as a power source, and the like.

A vehicle according to an embodiment of the present disclosure may be an autonomous driving vehicle.

The left of the vehicle denotes the left side of a traveling direction of the vehicle, and the right of the vehicle denotes the right side of a traveling direction of the vehicle.

A front side is a forward driving direction of the vehicle, and a rear side is a backward driving direction of the vehicle.

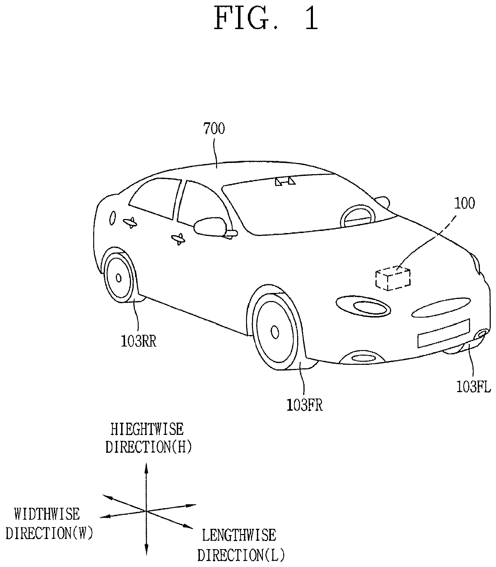

FIG. 1 is a view illustrating an outer appearance of a vehicle according to an embodiment of the present disclosure.

Referring to FIG. 1, a vehicle 700 may include wheels 103FR, 103FL, 103RL, ... rotated by a power source, a steering apparatus for controlling the traveling direction of the vehicle 700, and the like.

The steering apparatus may include a steering wheel. A user may determine the traveling direction of the vehicle 700 through the steering wheel.

A steering input received through the steering apparatus may be transferred to a steering wheel.

The steering apparatus may be electrically or mechanically connected to the steering wheel.

The steering wheels may be preferably front wheels 103FL, 103FR, but all the front wheels 103FL, 103FR and rear wheels 103RR, ...) may be operated as steering wheels.

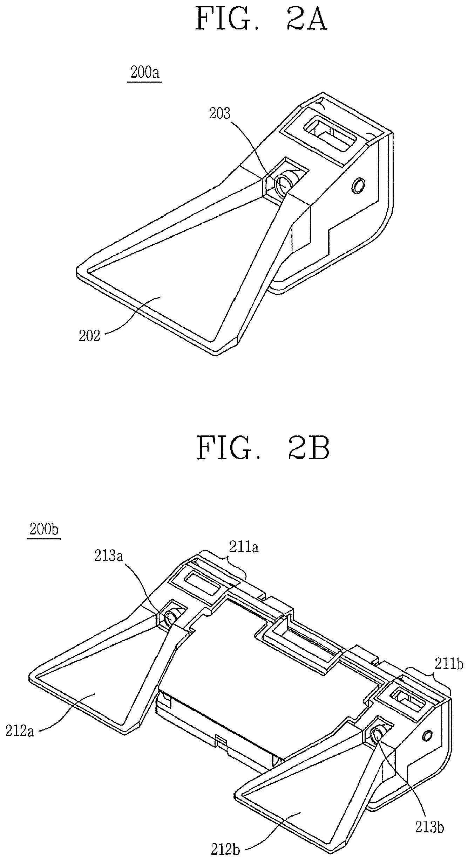

FIGS. 2A through 3C are views referred to explain various embodiments of a camera module included in a control device according to an embodiment of the present disclosure.

Referring to FIG. 2A, a camera unit 200a may include an image sensor (for example, CCD or CMOS), a lens 203, and a light shield 202 for shielding part of light incident to the lens 203.

The camera unit 200a may have a structure capable of being detachable from or attachable to an indoor ceiling or wind shield.

The camera unit 200a may acquire an image in the vicinity of the vehicle. For example, the camera unit 200a may acquire an image in front or rear of the vehicle. The image acquired through the camera unit 200a may be transmitted to an image processing processor (reference numeral 202 in FIG. 2G).

On the other hand, an image acquired from a mono camera unit 200a may be referred to as a mono image. Furthermore, the camera unit 200a described with reference to FIG. 2A may be referred to as a mono camera unit or single camera unit.

Referring to FIG. 2B, a camera unit 200b may include a first camera 211 a and a second camera 211 b. The first camera 211 a may include a first image sensor (for example, CCD or CMOS) and a first lens 213a. The second camera 211b may include a second image sensor (for example, CCD or CMOS) and a second lens 213b.

On the other hand, the camera unit 200b may include a first light shield 212a and a second light shield 212b for shielding part of light incident to the first lens 213a and second lens 213b.

The camera unit 200b may be detachable from or attachable to an indoor shield or wind shield. For example,

The camera unit 200b may acquire an image in the vicinity of the vehicle. For example, the camera unit 200b may acquire an image in front or rear of the vehicle. The image acquired through the camera unit 200b may be transmitted to an image processing processor (reference numeral 202 in FIG. 2G).

On the other hand, an image acquired from the first camera 211 a and second camera 211b may be referred to as a stereo image.

On the other hand, the camera unit 200b described with reference to FIG. 2B may be referred to as a stereo camera unit.

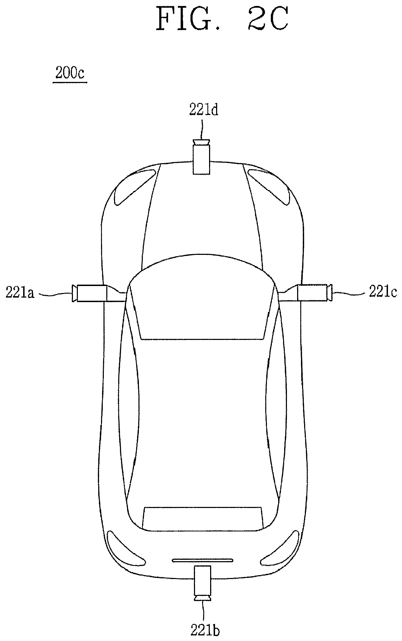

Referring to FIG. 2C, a camera unit 200c may include a plurality of cameras 221 a, 221b, 221c, 221d.

For example, a left camera 221 a may be disposed within a case surrounding a left side mirror. A right camera 221 c may be disposed within a case surrounding a right side mirror. A front camera 221 d may be disposed in one region of a front bumper. A rear camera 221b may be disposed in one region of a trunk lid.

The plurality of cameras 221 a, 221 b, 221 c, 221 d may be disposed at a left side, a rear side, a right side and a front side of the vehicle, respectively. The plurality of cameras 221a, 221b, 221c, 221d may respectively include an image sensor (for example, CCD or CMOS) and a lens.

The camera unit 200c may acquire an image adjacent to the vehicle. For example, the camera unit 200c may acquire images at a front side, a rear side, a left side and a right side of the vehicle. An image acquired through the camera unit 200c may be transmitted to an image processing processor (not shown).

On the other hand, images acquired from the plurality of cameras 221 a, 221 b, 221 c, 221 d in FIG. 2C or a composite image of the acquired images may be referred to as an around view image. Furthermore, the camera unit 200c described with reference to FIG. 2C may be referred to as an around view camera unit.

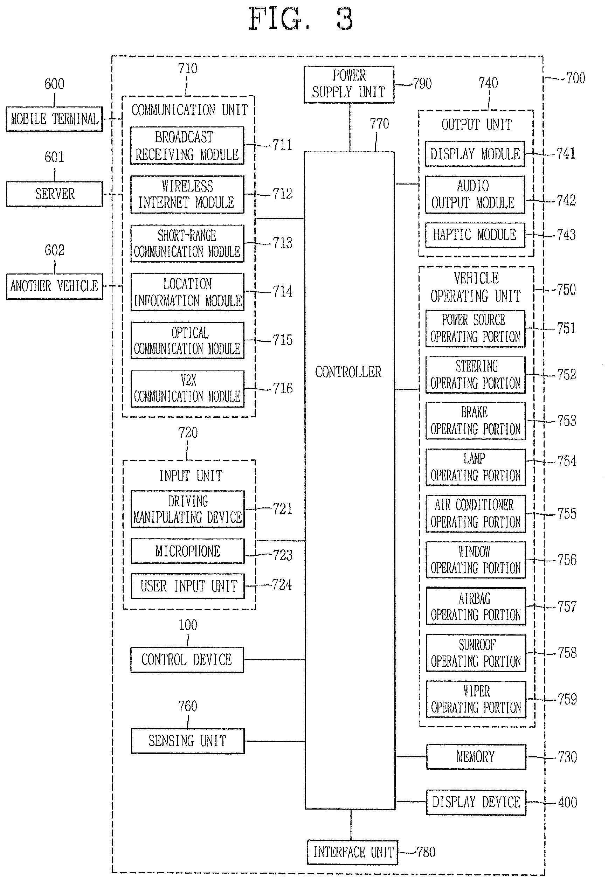

FIG. 3 is a block diagram referred to explain a vehicle 700 according to an embodiment of the present disclosure.

Referring to FIG. 3, the vehicle 700 may include a communication unit 710, an input unit 720, a sensing unit 760, an output unit 740, a vehicle drive unit 750, a memory 730, an interface unit 780, a controller 770, a power unit 790, a control device 100, a driver status monitoring (DSM) system and a display device 400 for a vehicle.

The communication unit 710 may include one or more modules capable of allowing wireless communication between the vehicle 700 and a mobile terminal 600, the vehicle 700 and an external server 601 or the vehicle 700 and another vehicle 602. Furthermore, the communication unit 710 may include one or more modules for connecting the vehicle 700 to one or more networks.

The communication unit 710 may include a broadcast receiving module 711, a wireless internet module 712, a short-range communication module 713, a location information module 714, an optical communication module 715, and a V2X communication module 716.

The communication unit 710 may receive weather information. The communication unit 710 may receive weather information from an outside through the broadcast receiving module 711, wireless internet module 712 or V2X communication module 716.

The communication unit 710 may receive traveling road information. The communication unit 710 may determine the location of the vehicle 700 through the location information module 714, and receive road information corresponding to the location of the vehicle 700 through the wireless internet module 712 or V2X communication module 716.

The communication unit 710 may receive traffic signal change information from the external server 601 through the V2X communication module 716. Here, the external server 601 may be a server located at a traffic control center for controlling traffic.

The broadcast receiving module 711 receives a broadcast signal or broadcast associated information from an external broadcast management server through a broadcast channel. Here, broadcast may include radio broadcast or TV broadcast.

The wireless internet module 712 refers to a module for wireless internet access, and may be integrally or separably mounted on the vehicle 700. The wireless internet module 712 is configured to transmit or receive wireless signals from communication networks according to the wireless internet technologies.

The wireless internet technologies may include Wireless LAN (WLAN), Wireless-Fidelity (Wi-Fi), Wireless Fidelity Direct (Wi-Fi Direct), Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), LTE (Long Term Evolution), LTE-A (Long Term Evolution-Advanced), and the like, and the wireless internet module 712 may transmit or receive data according to at least one wireless internet technology in a range including even internet technologies which are not listed in the above. For example, the wireless internet module 712 may exchange data in a wireless manner with the external server 601. The wireless internet module 712 may receive weather information, traffic condition information (for example, transport protocol expert group (TPEG) information) on roads.

The short-range communication module 713 is provided for short-range communication, and may support short-range communication using at least one of Bluetooth^{™}, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless Universal Serial Bus (Wireless USB) technologies.

The short-range communication module 713 may form wireless area networks to perform short-range communication between the vehicle 700 and at least one external device. For example, the short-range communication module 713 may exchange data in a wireless manner with the mobile terminal 600. The short-range communication module 713 may receive weather information, traffic condition information (for example, transport protocol expert group (TPEG) information) on roads from the mobile terminal 600. For example, when a user is aboard the vehicle 700, the user's mobile terminal 600 and vehicle 700 may automatically perform pairing with each other or by the execution of the user's application.

The location information module 714, a module for acquiring the location of the vehicle 700, may include a global positioning system (GPS) as a representative example. For example, the vehicle may acquire the location of the vehicle using a signal sent from a GPS satellite when the GPS module is used.

The optical communication module 715 may include a light transmitter and light receiver.

The light receiver may convert a light signal into an electrical signal to receive information. The light receiver may include a photo diode (PD) for receiving light. The photo diode may convert light into an electrical signal. For example, the light receive may receive the information of a preceding vehicle through light emitted from a light source included in the preceding vehicle.

The light transmitter may include at least one of light emitting elements for converting an electrical signal into a light signal. Here, light emitting element may be preferably a light emitting diode (LED). The light transmitter converts an electrical signal into a light signal to transmit it to an outside. For example, the light transmitter may emit a light signal to an outside through the on/off of a light emitting element corresponding to a predetermined frequency. According to an embodiment, the light transmitter may include a plurality of light emitting element arrays. According to an embodiment, the light transmitter may be integrated into a lamp provided in the vehicle 700.

For example, the light transmitter may be any one of headlights, tail lights, brake lights, turn signals and sidelights. For example, the optical communication module 715 may exchange data with another vehicle 602 through optical communication.

The V2X communication module 716 is a module for performing wireless communication with the external server 601 or another vehicle 602. The V2X communication module 716 may include a module capable of implementing a communication (V2V) protocol between vehicles or communication (V2I) protocol between the vehicle and the infrastructures. The vehicle 700 may perform wireless communication with the external server 601 and another vehicle 602 through the V2X communication module 716.

The input unit 720 may include a camera, a camera unit 200a, 200b, 200c, a microphone 723, and a user input unit 724.

The microphone 723 may process an external audio signal into electrical data. The processed data may used in various ways according to a function being carried out in the vehicle 700. The microphone 723 may convert a user's voice command into electrical data.

The converted electrical data may be transferred to the controller 770.

On the other hand, according to an embodiment, the camera or 7723may be a constituent element included in the sensing unit 760 other than an constituent element included in the input unit 720.

The user input unit 724 is provided to receive information from a user. When information is received through the user input unit 724, the controller 770 may control the operation of the vehicle 700 corresponding to the received information. The user input unit 724 may include a touch type input device or mechanical type input device. According to an embodiment, the user input unit 724 may be disposed in one region of a steering wheel. In this case, a driver may manipulate the user input unit 724 with his or her finger while holding the steering wheel.

The user input unit 724 may receive a turn signal input.

The sensing unit 760 senses a signal associated with the traveling of the vehicle 700 or the like. To this end, the sensing unit 760 may include a collision sensor, a wheel sensor, a speed sensor, a tilt sensor, a weight sensor, a heading sensor, a yaw sensor, an acceleration sensor, a gyro sensor, a position module, a vehicle forward/reverse sensor, a battery sensor, a fuel sensor, a tire sensor, a steering sensor due to handle rotation, a vehicle interior temperature sensor, a vehicle interior humidity sensor, a rain sensor, a luminance sensor, a tire pressure sensor, an ultrasonic sensor, a light detection and ranging (LiDAR), and the like.

As a result, the sensing unit 760 may acquire sensing signals on vehicle collision information, vehicle direction information, vehicle location information (GPS information) vehicle angle information, vehicle traveling speed information, vehicle acceleration information, vehicle tilt information, vehicle forward/reverse information, battery information, fuel information, tire information, vehicle lamp information, vehicle interior temperature information, vehicle interior humidity information, information on whether it rains or not, a steering wheel rotation angle, ambient luminance information, tire pressure information, and the like.

On the other hand, the sensing unit 760 may further include a gas pedal sensor, a pressure sensor, an engine speed sensor, an air flow sensor (AFS), an air temperature sensor (ATS), a water temperature sensor (WTS), a TDC sensor, a crank angle sensor, and the like.

On the other hand, the ultrasonic sensor, radar or LIDAR may detect and track an object. The ultrasonic sensor, radar or LIDAR may calculate a distance and a relative speed to the detected object.

The ultrasonic sensor, radar or LIDAR may sense a dangerous situation. A process included in the ultrasonic sensor, radar or LIDAR may sense a dangerous situation based on a distance to the object.

The sensing unit 760 may include a posture sensor. The posture sensor may sense the posture of the vehicle. The posture sensor may generate the posture information of the vehicle.

The posture sensor may include the foregoing yaw sensor, acceleration sensor, gyro sensor, and body tilt sensor.

The sensing unit 760 may include a wind sensor. The wind sensor may sense a wind direction and a wind speed. The wind sensor may generate wind direction information and wind speed information. The wind sensor may include a ultrasonic type wind sensor. The wind sensor may measure the speed and direction of wind using the property of increasing or decreasing the speed of transferring ultrasonic waves being transferred through an air medium.

The sensing unit 760 may include a biometric information sensing unit. The biometric information sensing unit senses and acquires the biometric information of a passenger. The biometric information may include fingerprint information, iris-scan information, retina-scan information, hand geometry information, facial recognition information, voice recognition information, and the like. The biometric information sensing unit may include a sensor for sensing the biometric information of a passenger. Here, the internal camera and microphone 723 may be operated as a sensor. The biometric information sensing unit may acquired hand geometry information, facial recognition information and the like through the internal camera.

The output unit 740 is provided to output information processed in the controller 770, and may include a display unit 741, an audio output unit 742 and a haptic output unit 743.

The display unit 741 may display information processed in the controller 770. For example, the display unit 741 may display vehicle associated information. Here, vehicle associated information may include vehicle control information for directly controlling a vehicle or vehicle driving assistance information for providing driving guide to a vehicle driver. Furthermore, the vehicle associated information may include vehicle status information for notifying the current status of the vehicle or vehicle travel information associated with the traveling of the vehicle.

The display unit 741 may include at least one of a liquid crystal display (LCD), a thin film transistor-liquid crystal display (TFT-LCD), an organic light emitting diode (OLED), a flexible display, a 3-dimensional (3D) display, and an e-ink display.

The display unit 741 may form an interlayer structure with or may be integrally formed with a touch sensor to implement a touch screen. The touch screen may provide an output interface between the vehicle 700 and a user while at the same time functioning as the user input unit 724 for providing an input interface between the vehicle 700 and the user. In this case, the display unit 741 may include a touch sensor for sensing a touch to the display unit 741 to receive a control command. Using this, when a touch to the display unit 741 is carried out, the touch sensor may sense the touch, and the controller 770 may generate a control command corresponding to the touch based on this. Input data due to a touch method may be a text or number, an instruction or specifiable menu item in various modes, and the like.

On the other hand, the display unit 741 may include a cluster to check vehicle status information or vehicle travel information while a driver drives a vehicle. The cluster may be located on a dash board. In this case, the driver may check information displayed on the cluster while maintaining his or her line of sight in a forward direction of the vehicle.

On the other hand, according to an embodiment, the display unit 741 may be implemented as a head-up display (HUD). When the display unit 741 is implemented as a HUD, information may be displayed through a transparent displayed provided on a wind shield. Alternatively, the display unit 741 may be provided with a projection module to display information through an image projected on the wind shield.

The audio output unit 742 converts and outputs an electrical signal supplied from the controller 770 into an audio signal. To this end, the audio output unit 742 may include a speaker or the like. The audio output unit 742 is also able to output a sound corresponding to the operation of the user input unit 724.

The haptic output unit 743 generates a tactile output. For example, the haptic output unit 743 may be operated to vibrate a steering wheel, a safety belt, a seat to allow the user to recognize the output.

The vehicle drive unit 750 may control the operation of various devices in a vehicle. The vehicle drive unit 750 may receive a control signal from a steering apparatus or control device 100. The vehicle drive unit 750 may control each device based on the control signal.

The vehicle drive unit 750 may include a power source drive unit 751, a steering drive unit 752, a brake drive unit 753, a lamp drive unit 754, an air conditioning drive unit 755, a window drive unit 756, an airbag drive unit 757, a sunroof drive unit 758 and a suspension drive unit 759.

The power source drive unit 751 may perform electronic control for a power source within the vehicle 700.

For example, a fossil fuel based engine is a power source, the power source drive unit 751 may perform electronic control for an engine. Due to this, it may be possible to control an output torque of the engine. When the power source drive unit 751 is an engine, an engine torque output may be limited by the control of the controller 770 to limit the speed of the vehicle.

For another example, when an electricity base motor is a power source, the power source drive unit 751 may perform control for the motor. Due to this, it may be possible to control a rotation speed, a torque or the like of the motor.

The power source drive unit 751 may receive an acceleration control signal from the steering apparatus or control device 100. The power source drive unit 751 may a power source according to the received acceleration control signal.

The steering drive unit 752 may perform electronic control for a steering apparatus within the vehicle 700. Due to this, it may be possible to change the traveling direction of a vehicle.

The steering drive unit 752 may receive a steering control signal from the steering apparatus or control device 100.

The steering drive unit 752 may control the steering apparatus according to the received steering control signal.

The brake drive unit 753 may perform electronic control for a brake apparatus 153 within the vehicle 700. For example, the brake drive unit 753 may control the operation of a brake (or brake apparatus) disposed on a wheel to reduce the speed of the vehicle 700 or disallow the vehicle to move. For another example, the operations of brakes (brake apparatuses) disposed on a left wheel and a right wheel may be different to adjust the traveling direction of the vehicle 700 to the left or the right. The brake drive unit 753 may receive a deceleration control signal from the steering apparatus. The brake drive unit 753 may control a brake apparatus according to the received deceleration control signal.

The lamp drive unit 754 may control the turn-on/turn-off of a lamp disposed at an inside and an outside of the vehicle. Furthermore, the lamp drive unit 754 may control the light intensity, direction or the like of the lamp. For example, the lamp drive unit 754 may perform control for headlamps (low-beam, high-beam), turn indicator lamps, brake lamps, and the like.

The air conditioning drive unit 755 may perform electronic control for an air conditioner within the vehicle 700. For example, where the temperature within the vehicle is high, the air conditioner is operated to control cold air to an inside of the vehicle.

The window drive unit 756 may perform electronic control for a window apparatus within the vehicle 700. For example, the window drive unit 756 may control the opening or closing of left and right windows on a lateral surface of the vehicle.

The airbag drive unit 757 may perform electronic control for an airbag apparatus within the vehicle 700. For example, in a dangerous condition, the airbag drive unit 757 may control an airbag to be inflated.

The sunroof drive unit 758 may perform electronic control for a sunroof apparatus within the vehicle 700. For example, the sunroof drive unit 758 may control the opening or closing of a sunroof.

The suspension drive unit 759 may perform electronic control for a suspension apparatus within the vehicle 700. For example, when a road surface is curved, the suspension apparatus may be controlled to reduce the vibration of the vehicle 700. The suspension drive unit 759 may receive a suspension control signal from the steering apparatus or control device 100. The suspension drive unit 759 may control the suspension apparatus according to the received suspension control signal.

The memory 730 is electrically connected to the controller 770. The memory 730 may store basic data for a unit, control data, input/output data for the operation control of a unit, and the like. The memory 730 may store various data for the entire operation of the vehicle 700 such as a program for processing or controlling the controller 770 or the like.

The memory 730 may include a flash memory, a hard disk, a solid state disk (SDD), a silicon disk drive (SDD), a multimedia card micro type, a card memory (for example, an SD, a XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. The vehicle 700 may be operated in association with a web storage apparatus that, like the memory 730, performs a storage function over the Internet.

The memory 730 may be integrally formed with the controller 770.

The interface unit 780 may perform the role of a path to various types of external devices connected to the vehicle 700. For example, the interface unit 780 may include a port that is connectable to the mobile terminal 600, and connected to the mobile terminal 600 through the port. In this case, the interface unit 780 may exchange data with the mobile terminal 600.

On the other hand, the interface unit 780 may perform the role of a path of supplying electrical energy to the mobile terminal 600 connected thereto. When the mobile terminal 600 is electrically connected to the interface unit 780, the interface unit 780 provides electrical energy supplied from the power unit 790 to the mobile terminal 600 according to the control of the controller 770.

The interface unit 780 performs the role of a path to various types of external devices connected to the vehicle 700. The interface unit 780 may include wired or wireless headset ports, external power supply ports, wired or wireless data ports, memory card ports, ports for connecting a device having an identification module, audio input/output (I/O) ports, video I/O ports, earphone ports, or the like. The vehicle 700 may execute an appropriate control associated with a connected external device, in response to the external device being connected to the interface unit 160.

The controller 770 may control the entire operation of each unit, apparatus or each constituent element within the vehicle 700.

The controller 770 may be referred to as an electronic control unit (ECU). In the aspect of hardware, the controller 770 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electrical units designed to perform other functions.

The power unit 790 may supply power required for the operation of each constituent element according to the control of the controller 770. In particular, the power unit 790 may receive power from a battery (not shown) within the vehicle.

The steering apparatus or control device 100 may exchange data with the controller 770. Various information, data or control signals generated from the control device 100 may be outputted to the controller 770.

The driver status monitoring (DSM) system is a system of monitoring the status of a driver, and controlling the vehicle 700 according to the status of the driver. The DSM system 260 may include an input device such as an internal camera, a microphone or the like.

The DSM system (not shown) may sense the status of the driver whether the driver stares forward, whether he or she is drowsy, whether he or she takes food, whether he or she manipulates a device, and the like. Furthermore, the DSM system may sense the driving concentration of the driver while driving.

The DSM system may include a photoplethysmography sensor (PPG). The PPG sensor may be disposed in one region of a steering wheel that can be in contact with a user (for example, driver) body. The PPG sensor may be disposed in one region of a steering wheel rim. The DSM system may acquire and analyze a driver's biological signals through the PPG sensor.

For example, the DSM system may acquire biological signals to generate a driver's body state information as the status information of the driver.

For example, the DSM system may acquire biological signals to generate a driver's excited state information as the status information of the driver.

For example, the DSM system may analyzes a driver image acquired from an internal camera to generate a driver's drowsy state information as the status information of the driver.

For example, the DSM system may analyzes a driver image acquired from an internal camera to generate a driver's device manipulation state information.

The DSM system may provide the status information of the driver to the steering apparatus or control device 100.

The display device 400 for a vehicle may exchange data with the controller 770. The controller 770 may receive navigation information from the display device 400 for a vehicle or an additional navigation apparatus (not shown). Here, the navigation information may include set destination information, route information according to the destination, map information associated with the traveling of the vehicle or vehicle location information.

On the other hand, the vehicle 700 according to an embodiment disclosed in the present disclosure may include the control device 100. The control device 100 may control various lamps provided in the vehicle 700.

The various lamps may include a headlamp formed to irradiate visible light in a forward direction of the vehicle, a rear lamp formed to irradiate visible light in a backward direction of the vehicle, a turn indicator lamp, and the like.

The headlamp may be formed in combination of a headlight, a lamp capable of irradiating at least one of low-beam and high-beam based on a user's request and one or more turn indicator lamps.

The control device 100 associated with the present disclosure may be an independent apparatus (or component, constituent element) for controlling at least one constituent element (for example, headlamp 155, sensing unit 760, or the like) provided in the vehicle 700.

Furthermore, the control device 100 may control various units, constituent elements, apparatuses illustrated in FIG. 3 as a whole. In other words, the control device 100 may be the controller 770 of the vehicle. In this case, hereinafter, operations, functions, controls or the like that can be carried out by the control device 100 (or processor 170) described in relation to the control device 100 may be performed by the controller 770 of the vehicle 700.

Furthermore, the control device 100 may be referred to as a lamp control device, a vehicle control device, a vehicle assistance device or the like, from the perspective of controlling the lamps provided on the vehicle.

Meanwhile, for the sake of explanation in this specification, description will be given under assumption that the control device 100 is a single independent device (structure or component).

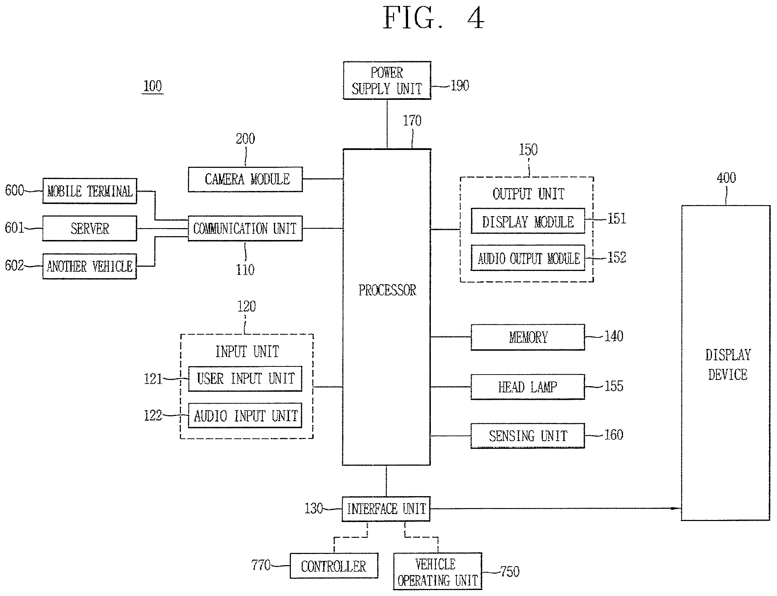

Hereinafter, the control device 100 according to the present invention will be described in more detail, with reference to FIG. 4. The following description will be applied to a case where the control device 100 provided in the vehicle is configured as the independent device.

FIG. 4 is a block diagram referred to explain a control device according to an embodiment of the present invention.

Referring to FIG. 4, the control device 100 according to the present invention may include a camera module 200, a communication unit 110, an input unit 120, an interface unit 130, a memory 140, an output unit 150, a headlamp 155, a sensing unit 160, a processor 170 and a power unit 190.

The camera module 200 (or camera) may acquire surrounding images of the vehicle.

Data, signals or information generated in the camera module 200 are transmitted to the processor 170.

The camera module 200 may be the camera unit 200a, 200b, 200c described with reference to FIGS. 2A to 2C.

For example, the camera module 200 may be the mono camera unit 200a. The mono camera unit 200a may acquire a mono image as the surrounding image of the vehicle.

For example, the camera module 200 may be the stereo camera unit 200b. The stereo camera unit 200b may acquire a stereo image as the surrounding image of the vehicle.

For example, the camera module 200 may be an around view camera unit 200c.

The around view camera unit 200c may acquire an around view image as the surrounding image of the vehicle.

The communication unit 110 may exchange data with the mobile terminal 600, the server 601 or the another vehicle 602 in a wireless manner. Specifically, the communication unit 110 may exchange data with the mobile terminal of the driver of the vehicle in a wireless (or wired) manner. Examples of such wireless communication method may include various communication methods, such as Bluetooth, WiFi direct, WiFi, APiX, NFC, etc.

The communication unit 110 may receive weather information, road traffic condition information, for example, TPEG information from the mobile terminal 600 or the server 601. Meanwhile, the vehicle assistance device 100 may also transmit recognized real-time information to the mobile terminal 600 or the server 601.

Meanwhile, when the user gets in the vehicle, the user's mobile terminal 600 and the control device 100 may perform pairing with each other automatically or by the user's execution of an application. In view of this, the control device 100 may be referred to as a vehicle assistance device.

The communication unit 110 may receive traffic light change information from the external server 601.

Here, the external server 601 may be a server located in a traffic control station for controlling traffic.

The communication unit 110 may receive weather information from the external server 601. Here, the external server 601 may be a server of an organization or an operator providing the weather information. For example, the communication unit 110 may receive, for each region, fine dust information, smog information or yellow dust information from the external server 601.

The input unit 120 may include a user input unit 121 and an audio input unit 122.

The user input unit 121 may include a plurality of buttons or a touch screen. The user input unit 121 may turn on the control device 100 through the plurality of buttons or the touch screen. The user input unit 121 may also perform various input operations.

The audio input unit 122 may receive the user's voice input. The audio input unit 122 may include a microphone switching the voice input into an electric signal. The audio input unit 122 may receive the user's voice to turn on the vehicle assistance device 100. The user input unit 121 may also perform other various input operations.

The input unit 120 may be the input unit 720 illustrated in FIG. 3.

Furthermore, the input unit 120 may denote the vehicle drive unit 750. For example, the input unit 120 may include a lamp drive unit 754 capable of turning on/off the headlamp 155.

The interface unit 130 may receive information, signals or data, or transmit information, signals or data processed or generated in the processor 170 to an outside. To this end, the interface unit 130 may perform data communication with the controller 770, the vehicle display device 400, the sensing unit 760, the vehicle drive unit 750 and the like provided in the vehicle, through wired or wireless communication technologies.

The interface unit 130 may allow for receiving navigation information through data communications with the controller 770, the vehicle display device 400 or a separate navigator.

Here, the navigation information may include information related to a preset destination, path information based on the destination, map information related to driving of the vehicle, or vehicle location information. Meanwhile, the navigation information may include location information related to the vehicle on a road.

On the other hand, the present disclosure may not be necessarily limited to this, and the control device 100 may generate navigation information by itself, and output the navigation information through the output unit 150 (display unit 151, audio output unit 152). Such an operation may be carried out under the control of the processor 170 of the control device 100.

Meanwhile, the interface unit 130 may allow for receiving sensor information from the controller 770 or the sensing unit 160, 760.

Here, the sensor information may include information related to at least one of an orientation of the vehicle, a location (GPS) of the vehicle, an angel of the vehicle, a driving speed of the vehicle, an acceleration of the vehicle, a tilt of the vehicle, a forward/backward movement of the vehicle, a battery, a fuel, a tire, a vehicle lamp, internal temperature of the vehicle, external temperature of the vehicle, internal humidity of the vehicle, external humidity of the vehicle, and raining.

The sensor information may be acquired from a heading sensor, a yaw sensor, a gyro sensor, a position module, a vehicle forward/backward movement sensor, a wheel sensor, a vehicle velocity sensor, a vehicle tilt detecting sensor, a battery sensor, a fuel sensor, a tire sensor, a steering sensor by a turn of a handle, a vehicle internal temperature sensor, a vehicle external temperature sensor, a vehicle internal humidity sensor, a vehicle external humidity sensor, a rain sensor, a GPS sensor and the like.

Meanwhile, among those sensor information, the vehicle orientation information, the vehicle location information, the vehicle angle information, vehicle velocity information, the vehicle tilt information and the like, all related to the driving of the vehicle, may be referred to as vehicle driving information.

The interface unit 130 may receive passenger information. Here, the passenger information may be information received through an input device. Or, the passenger information may be information acquired through a passenger detecting sensor (e.g., a camera capturing a passenger's state). Or, the passenger information may be information received from a mobile terminal belonging to the passenger.

The memory 140 may store various data for an overall operation of the control device 100, such as programs for processing or control of the processor 170.

The memory 140 may store data for checking a predetermined object. For example, the memory 140 may store information for checking (or verifying) what the object corresponds to, according to a preset algorithm, when the predetermined object is detected from an image acquired through the camera module 200.

Meanwhile, the memory 140 may be various storage media, such as ROM, RAM, EPROM, a flash drive, a hard drive and the like, in hardware configuration. The memory 140 may be integrally formed with the processor 170.

The output unit 150 may generate a visual, audible or tactile output, and may include at least one of the display unit 151, the audio output unit 152, the haptic module and an optical output module. The display unit 151 may implement a touch screen as being layered or integrated with a touch sensor. The touch screen may function as the user input unit 121 providing a user input interface between the control device 100 and the user and simultaneously providing an output interface between the control device 100 and the user.

The output unit 150 included in the control device 100 may be the output unit 740 illustrated in FIG. 3, or an additional device.

Similarly, the display unit 151 may also be the display device 400 illustrated in FIG. 3, or an additional device.

The headlamp 155 may be provided in front of the vehicle 700. The headlamp 155 may be formed with various light sources. For example, the rear lamp 154 may emit light by a light source including at least one of a bulb, a micro LED, a matrix LED, an OLED, a laser diode, and the like.

Furthermore, the headlamp 155 may be implemented by at least one of a light source, a reflector for reflecting light emitted from the light source, a shield for forming a preset low-beam pattern, a formed body for changing the color of light and a projection lens. The headlamp 155 may output (irradiate, emit) at least one of low-beam and high beam in a forward direction of the vehicle according to a user's request.

The headlamp 155 may turn on/off the headlamp 155 when a user request is received through the lamp drive unit 754 or input unit 120, for example. When the headlamp 155 is on, light (for example, visible light) may be outputted (irradiated, emitted) in a forward direction of the vehicle.

The headlamp 155 and lamp drive unit 754 described in the above may be preferably provided in the vehicle 700. Meanwhile, hereinafter, for the sake of convenience of explanation, it is illustrated that the headlamp 155 and lamp drive unit 754 are included in the control device 100.

The control device 100 according to the present invention may include a sensing unit 160. Here, the sensing unit 160 may be the sensing unit 760 illustrated in FIG. 3. The sensing unit 160 may be the sensing unit 760 itself provided in the vehicle, or a separate component.

Even when the sensing unit 160 is the separate component, the structure of the sensing unit 760 provided in the vehicle will be applied equally/similarly.

For the sake of explanation, description will be given under assumption that the sensing unit 160 is included in the control device 100. Also, the same/like description of the sensing unit 760 provided in the vehicle and the use of the sensing unit 760 provided in the vehicle will be applied to description of the sensing unit 160 and the use of the sensing unit 160.

The processor 170 may control an overall operation of each unit within the control device 100. The processor 170 may be electrically connected to each unit, component or apparatus within the control device 100.

The processor 170 may process surrounding images acquired through the camera module 200. The processor 170 may process the vehicle surrounding image into a computer vision-based signal.

The processor 170 may merge a plurality of images received from the around view camera module 200c of FIG. 2C. Here, the plurality of images may be images received from the plurality of cameras 221a, 221b, 221c and 221d of FIG. 2C. The processor 170 may generate an around view image or an omnidirectional image by merging the plurality of images. For example, the around view image may be a top view image.

The processor 170 may detect at least one object based on each of the images acquired from the plurality of cameras 221a, 221b, 221c and 221d of FIG. 2C). Or, the processor 170 may detect at least one object based on the around view image.

Also, the processor 170 may detect at least one object based on the omnidirectional image. The lamp control device 100 may track a movement of the detected object.

During the detection of the object, the processor 170 may perform a lane detection (LD), a vehicle detection (VD), a pedestrian detection (PD), a brightspot detection (BD), a traffic sign recognition (TSR), a road surface detection, a structure detection and the like.

For example, the processor 170 may detect an object based on at least one of intensity, a color, histogram, a feature point, a shape, a space position and a motion.

The processor 170 may verify the detected object. The processor 170 may verify the detected object using an identifying method using a neural network, a support vector machine (SVM) method, an identifying method by AdaBoost using a Haar-like characteristic, a histograms of oriented gradients (HOG) technology, or the like. In this instance, the processor 170 may perform such verification by comparing the object detected from the surrounding image of the vehicle with data stored in the memory 140.

The processor 170 may track the verified object. The processor 170 may calculate a motion or a motion vector of the verified object and track a movement and the like of the object based on the calculated motion or motion vector.

Meanwhile, the processor 170, for hardware implementation, may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein.

The power unit 190 may supply power required for an operation of each component according to the control of the processor 170. Specifically, the power unit 190 may receive power supplied from an internal battery of the vehicle and the like.

As aforementioned, the control device 100 described in FIG. 4 may be a component or device independently provided in the vehicle 700 or the controller 770 described in FIG. 3.

The control device 100 which can include at least one of those components may control various lamps provided on the vehicle.

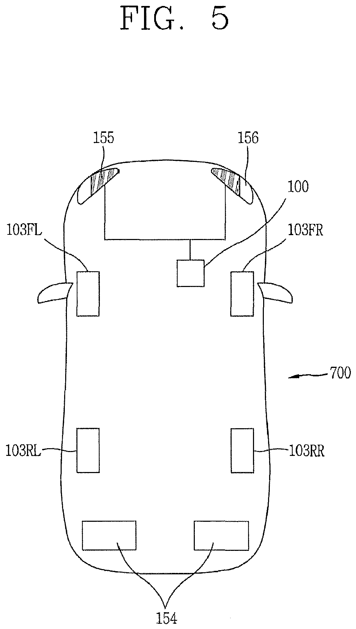

FIG. 5 is a conceptual view for explaining a headlamp provided on a vehicle according to an embodiment of the present invention.

Referring to FIG. 5, the vehicle 700 disclosed herein may include lamps 154, 155, 156 that can be controlled by the control device 100 (or the controller 770).

For example, the lamps may include head lamps 155 provided on a front side of the vehicle to irradiate visible light in a forward direction of the vehicle, rear lamps 154 provided on a rear side of the vehicle to emit visible light in a backward direction of the vehicle, and turn indicator lamps 156.

The rear lamp 154 and turn indicator lamp 156 are irrelevant to the present disclosure, and thus the detailed description thereof will be omitted.

The headlamp 155 may be turn on when a user request is received through the lamp drive unit 754 or input unit 120 as described above. When the headlamp 155 is turned on, light (visible light) may be irradiated toward in a forward direction of the vehicle 700.

For an example, when a low-beam output request is received by a user request, the headlamp 155 may irradiate low-beam in a forward direction of the vehicle 700. The low-beam may form a preset cut-off line, and the cut-off line may have various shapes according to the design.

Furthermore, the headlamp 155 may irradiate high-beam in a forward direction of the vehicle 700 when a high-beam output is requested by a user request. When a high-beam output is requested, in general, high-beam may be irradiated along with low-beam, a region irradiated with high-beam and a region irradiated with low-beam may overlap with each other on a partial portion thereof.

On the other hand, the low-beam or high-beam may be irradiated in a forward direction of the vehicle by the control of the control device 100. For example, when a light output request is received through the lamp drive unit 754 or input unit 120, the processor 170 of the control device 100 may control the headlamp 155 to allow the headlamp 155 to output light in a forward direction of the vehicle.

Furthermore, the headlamp 155 may be turned on when the ambient brightness is lower than the reference brightness by the sensing unit 160, 170. For example, when the brightness adjacent to the vehicle that is sensed through the sensing unit 160 is lower than a preset brightness, the processor 170 may control the headlamp 155 to irradiate light in a forward direction of the vehicle.

On the other hand, the headlamp 155 may be formed to change a light irradiation direction.

For example, the headlamp 155 may change the direction of irradiating light (light irradiation direction) by the control of the processor 170 of the control device 100.

For example, the processor 170 may control the headlamp 155 to irradiate light irradiated from the headlamp 155 in an upward direction (for example, heightwise direction (H)) based on a preset condition (for example, user manipulation or surrounding environment) in a state that light outputted from the headlamp 155 is irradiated in the lengthwise direction (D).

In the above, it is taken as an example in which the light irradiation direction of the headlamp 155 is changeable in an upward direction, but the present disclosure may not be necessarily limited to this, and the headlamp 155 may change the light irradiation direction in all directions.

The light irradiation direction of the headlamp 155 may be changed (varied) by at least one of various constituent elements (for example, a light source, a reflector, a shield, a formed body or a lens) forming the headlamp 155, or changed (varied) through a deformable member formed on a housing of the headlamp 155 or at an outside of the headlamp 155.

Hereinafter, the controlling (changing, varying) of the light irradiation direction of the headlamp 155 by the processor 170 may be carried out at least one of the constituent elements, housing and deformable member of the headlamp as described above.

The technology of varying the light irradiation direction of the headlamp may correspond to a general technology, and thus the detailed description thereof will be omitted.

On the other hand, the headlamp 155 associated with the present disclosure may include a plurality of light sources. In the headlamp 155, the plurality of light sources may be provided in a matrix form or the plurality of light sources may be provided in a micro form. Furthermore, the plurality of light sources may be formed in a matrix form in the size of micro units.

The plurality of light sources may be respectively a halogen lamp, a light emitting diode (LED) or a laser diode (LD).

The plurality of light sources may be individually controlled. The processor 170 may individually (or independently) control the plurality of light sources.

Here, individually controlling the plurality of light sources may include the meaning of individually turning on/off the plurality of light sources, individually adjusting the irradiation brightness (or amount of output light) or individually varying the light irradiation direction.

For example, the processor 170 may allow part of the plurality of light sources to be irradiated in a first irradiation direction and the rest of the plurality of light sources to be irradiated in a second irradiation direction different from the first irradiation direction.

For another example, the processor 170 may allow part of the plurality of light sources to be irradiated toward a front side of the vehicle, and the rest of the plurality of light sources to be irradiated on a sign sensed by the sensing unit 160. When the sensed sign is located in a side front direction or upper front direction of the vehicle, the headlamp 155 of the vehicle may irradiate light in two directions.

Meanwhile, the head lamp 155 of the present disclosure may be formed to output lights of different colors. The head lamp 155 of the present disclosure may be formed to output light of at least one of a plurality of colors.

In addition, the processor 170 may detect a peripheral environment of the vehicle 700 through the sensing unit 160. After that, the processor 170 may control the head lamp 155 to output light of a preset color, based on the peripheral environment detected through the sensing unit 160.

Specifically, the sensing unit 160 may detect a peripheral environment of the vehicle 700. The detecting of the peripheral environment may include a meaning that the sensing unit 160 receives (acquires, senses, extracts, detects, decides, or determines) information related to the peripheral environment of the vehicle.

For example, the sensing unit 160 may sense a kind of a road surface (road, ground) on which the vehicle 700 is located, a weather state, information related to a line indicated on the road surface (e.g., a color of the line, a kind of the line, etc.), a kind of a peripheral light source existing at the outside of the vehicle.

In addition, the sensing unit 160 may sense a situation in the vehicle 700. For example, the sensing unit 160 may sense a race of a driver driving the vehicle (e.g., whether the driver is an Asian or Westerner) and whether a user input has been received (or whether a user request has been received).

That is, the detecting of the peripheral environment of the vehicle described in this specification may include a meaning of detecting not only an external environment (state, condition) of the vehicle 700 but also an internal environment (state, condition) of the vehicle 700.

An operation of detecting the peripheral environment of the vehicle may be performed by combining one or two or more of various sensors described above, such as a camera included in the sensing unit 160, a laser sensor, a radar, a lidar, and an ultrasonic sensor.

The sensing unit 160 of the present disclosure, as described above, may be the sensing unit 760 provided in the vehicle or may be a separate sensing unit.

In addition, the sensing unit 160 may be mounted (provided, formed) at one part of the vehicle. As an example, the sensing unit 160 may be mounted in the head lamp 155. In this case, the sensing unit 160 may be understood as one component included in the head lamp 155.

However, the present disclosure is not limited thereto, and the sensing unit 160 may be mounted to the outside of the head lamp 155.

The processor 170 may control the head lamp 155 to output (radiate) light of a preset color, based on the peripheral environment detected through the sensing unit 160 described above.

Specifically, the processor 170 may control the head lamp 155 to radiate light of a color corresponding to color information associated with the peripheral environment detected by the sensing unit 160 among a plurality of colors that can be output from the head lamp 155.

As an example, color information may be associated for each peripheral environment (condition) in the memory 140 included in the control device 100 of the present disclosure. At least one (or a plurality of) peripheral environment (condition) associated with the color information may be stored in the memory 140.

That the processor 170 outputs light of a preset color may include a meaning of outputting light of a color corresponding to the color information associated with the peripheral environment (condition) detected through the sensing unit 160.

In this specification, for convenience of illustration, "light of a color corresponding to the color information associated with the peripheral environment (condition)" will be described as light of a color associated with the peripheral environment.

For example, when detected peripheral environments are different, and color information associated with the respective peripheral environments are different, the processor 170 may control the head lamp 155 to irradiate lights of different colors.

Specifically, if the peripheral environment detected through the sensing unit 160 corresponds to a first condition, the processor 170 may control the head lamp 155 to output light of a first color associated with the first condition. In addition, if the peripheral environment detected through the sensing unit 160 corresponds to a second condition different from the first condition, the processor 170 may control the head lamp 155 to output light of a second color associated with the second condition.

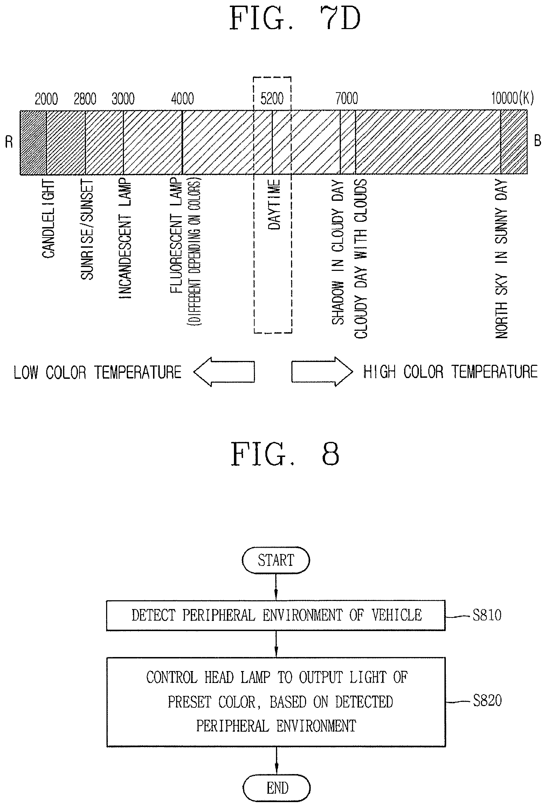

The outputting of the light of the preset color according to the peripheral environment (or condition) will be described in more detail later with reference to FIGS. 8 to 15.

Meanwhile, the head lamp 155 of the present disclosure may include a plurality of light modules (or a plurality of light sources).

Here, the light module may be understood as a unit lamp capable of further including a light source, a reflector, a shield, a phosphor, a projection lens, and other additional components. One or a plurality of light sources may be provided in one light module.

The processor 170 may control a plurality of light modules (or a plurality of light sources) to output lights of different colors.

For example, the processor 170 may control the head lamp 155 such that a portion of the plurality of light modules (or light sources) irradiates light of a first color and such that another portion of the plurality of light modules (or light sources) irradiates light of a second color different from the first color.

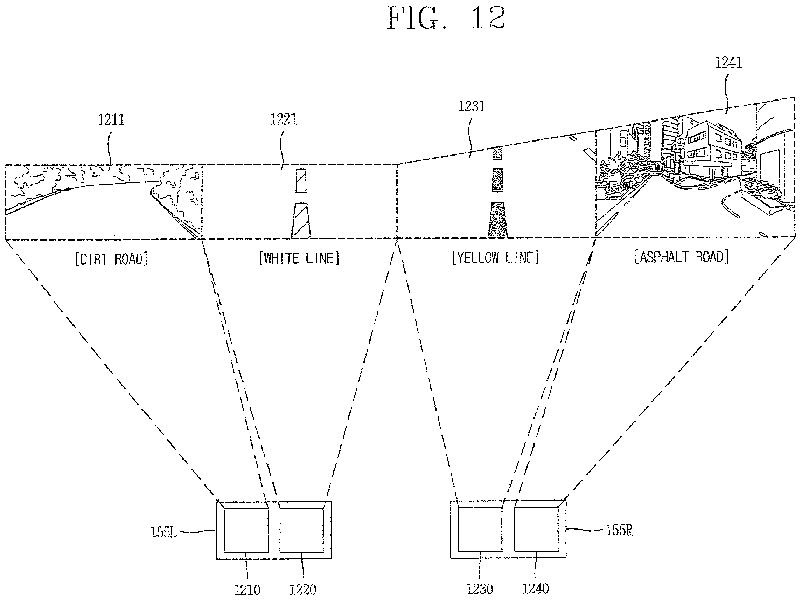

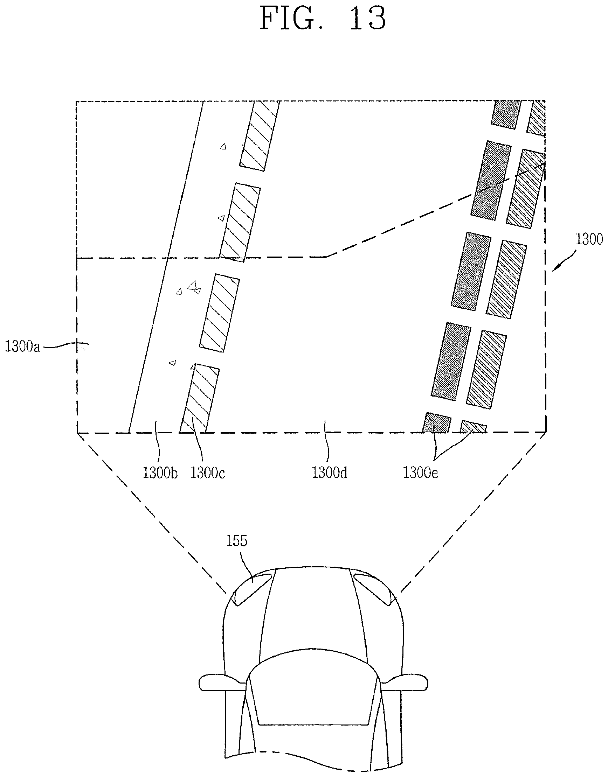

An exemplary embodiment in which the color of light is changed using a plurality of light modules or a plurality of light sources will be described in more detail later with reference to FIGS. 12 and 13.

Hereinafter, various structures of a head lamp (vehicle lamp) that can output light of at least one of a plurality of colors in the present disclosure will be described in more detail with reference to the accompanying drawings.

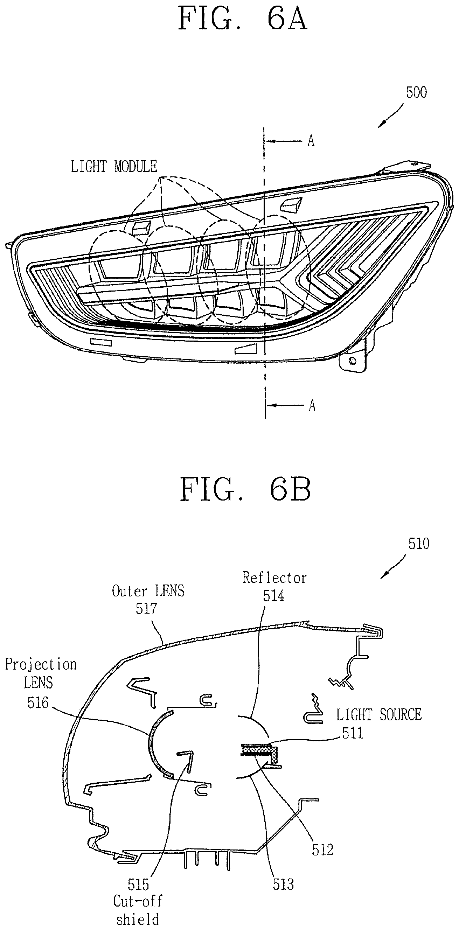

FIGS. 6A to 6F illustrate various structures of the head lamp according to the present disclosure, which are exemplary views illustrating structures of a section taken along line A-A of the head lamp.

The head lamp 500 described herein, as shown in FIG. 6A, may include at least one light module. Each light module may include one base substrate and at least one (or a plurality of) light source (or light emitting element) disposed on the base substrate. Each light source may be individually turned on/off under control of the controller.

The light module (or optical module) of the present disclosure may be applied to not only a projection type but also a non-projection type, i.e., a clear type.

FIG. 6B illustrates a section of a light module 510 of a projection type to which a reflector is applied.

In the projection type to which a reflector is applied, the light module 510 may include a low beam light source 511, a high beam light source 512, a low beam reflector 513, a high beam reflector 514, a shield 515, a projection lens 516, and an outer lens 517.

A case where the low beam light source 511 and the high beam light source 512 are respectively located in an upper direction and a lower direction with respect to a light axis Ax of the light module 510 will be described as an example. However, the present disclosure is not limited thereto, and the positions of the low beam light source 511 and the high beam light source 512 may be variously changed depending on usages or beam patterns of the light module 510.

The low beam reflector 513 is located in the light emission direction of the low beam light source 511, and the high beam reflector 514 is located in the light emission direction of the high beam light source 512.

The low beam reflector 513 is located over the low beam light source 511 and may have a reflective surface formed by depositing a material having high reflexibility, such as aluminum, on an inner surface thereof to reflect forward light generated upwardly from the low beam light source 511.

The low beam reflector 513 is an elliptical reflector and has two focuses. One focus corresponds to an installation position of the low beam light source 511, and the other focus is located adjacent to a cut-off edge of the shield 515 which will be described later. Hereinafter, the focus located to adjacent to the cut-off edge of the shield 515 is referred to as a first focus F1.

Because of optical characteristics of the elliptical reflector, the low beam reflector 513 condenses light emitted from the low beam light source 511 to the first focus F1.

The shield 515 is a member having an approximately plate shape, and includes a cut-off edge recessed backwardly at the front end thereof.

The light emitted from the low beam light source 511 is reflected by the low beam reflector 513 to be condensed to the first focus F1. A portion of the light condensed to the first focus F1 is blocked by the cut-off edge, and another portion of the light condensed to the first focus F1 is incident onto the projection lens 516 by passing through the first focus F1.

The light incident onto the projection lens 516 by passing through the first focus F1 has a low beam pattern in which a cut-offline is formed by the cut-off edge.

A base substrate of the low beam light source 511 is formed to have a flat surface, and light emitted from each light emitting element may be targeted by the low beam reflector 513.

The outer lens 517 divides the vehicle lamp into the interior and the exterior, and protects the inside of the vehicle lamp from foreign substances.

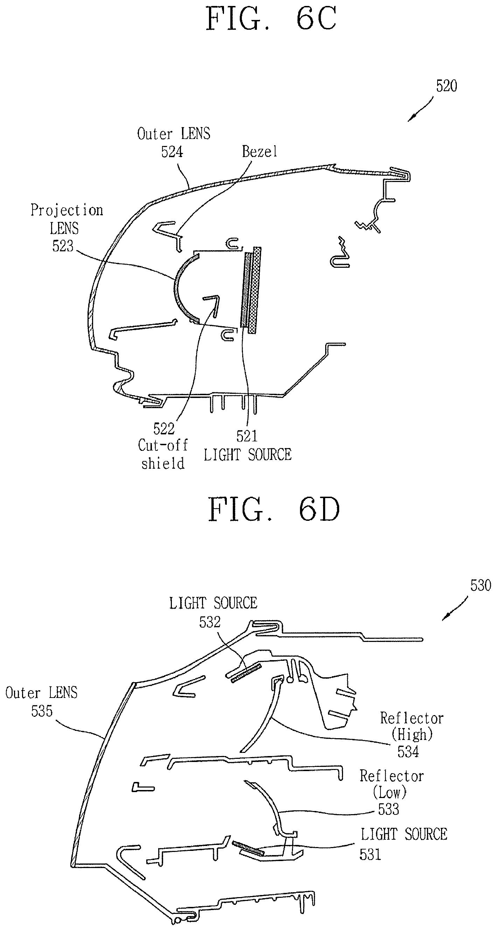

FIG. 6C illustrates a section of a light module 520 of a projection type to which any reflector is not applied.

In the projection type to which any reflector is not applied, the light module 520 may include a light source 521, a shield 525, a projection lens 523, and an outer lens 524.

In this case, at least a portion of the light source 521 may form a low beam pattern, and the other portion of the light source 521 may form a high beam pattern. The low beam pattern may have a cut-offline formed by the shield 525.

A bezel may be disposed between the projection lens 523 and the light source 521. The bezel may serve as a tunnel.

FIG. 6D illustrates a section of a light module 530 of a clear type to which a reflector is applied.

In the clear type to which a reflector is applied, the light module 530 may include a low beam light source 531, a high beam light source 532, a low beam reflector 533, a high beam reflector 534, and an outer lens 535.

The low beam light source 531 is disposed to face upward with respect to a light axis of the light module 530, and light emitted from the low beam light source 531 is refracted in different directions by the low beam reflector 533 to form a low beam pattern.

The high beam light source 532 is disposed to face downward with respect to the light axis of the light module 530, and light emitted from the high beam light source 532 is refracted in different directions by the high beam reflector 534 to form a high beam pattern.

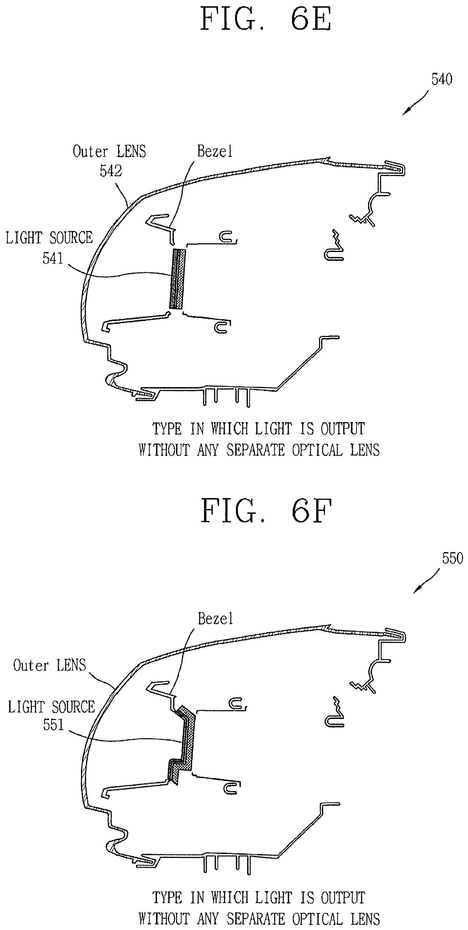

FIG. 6E illustrates a section of a light module 540 of a clear type to which any reflector is not applied.

In the clear type to which any reflector is not applied, the light module 540 may include a light source 541 and an outer lens 542. In this case, the light source 541 may be identified through the outer lens 542.

In a light module to which a reflector is applied, light is refracted by the reflector. Hence, a base substrate is formed to have a flat surface, and light emitting elements may have the same angle with respect to one direction.

In a light module to which any reflector is not applied, light output from a light source is directly emitted to form a distribution pattern. In this case, the light emitting elements (light sources) may have different angles with respect to one direction such that a predetermined distribution pattern is formed.

Meanwhile, FIG. 6F illustrates a section of a light module 550 including a flexible light source. In the light module 550 to which any reflector is not applied, light emitting elements (light sources) have different angles with respect to one direction, and hence a base substrate may be formed flexible to be bent.

In this case, as shown in FIG. 6F, a base substrate of a light source 551 may be implemented in a state in which at least a portion of the base substrate is bent.

When one light module is provided in a head lamp, the above-described light module may mean the head lamp (or vehicle lamp) itself.

Hereinafter, a structure for outputting at least one of a plurality of colors, which is applicable to at least one of the above-described light modules, will be described in more detail with reference to the accompanying drawings.

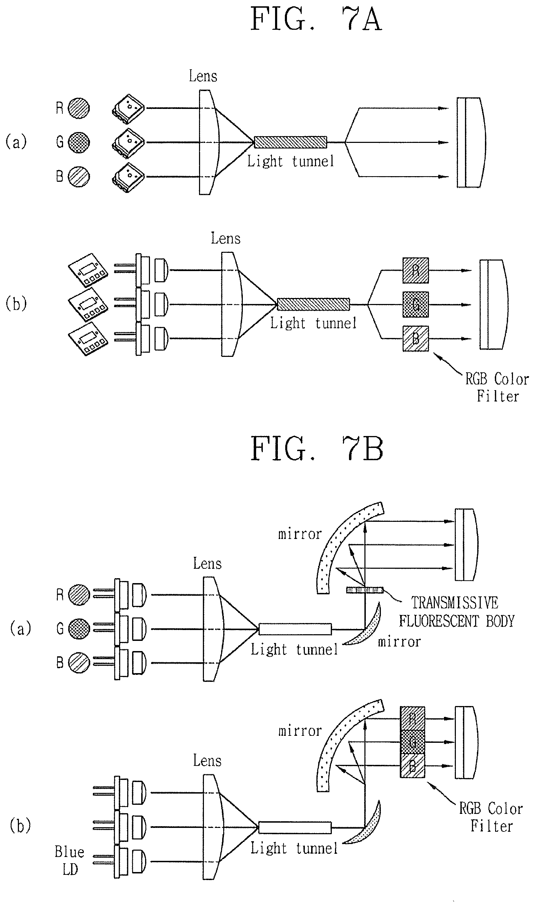

FIGS. 7A to 7D are conceptual views illustrating structures in which the head lamp according to the present disclosure outputs lights of various colors.

FIG. 7A illustrates an example in which a light source (light emitting element) included in the head lamp (light module) is a light emitting diode (LED).

The head lamp (light module) of the present disclosure, as shown in (a) of FIG. 7A, may include a plurality of light sources.

The plurality of light sources may output lights of different colors. For example, as shown in (a) of FIG. 7A, the plurality of light sources may be RGB light sources.

The processor 170 may control at least one of the plurality of light sources to output light of a preset color, based on a peripheral environment detected through the sensing unit 160.

The outputting of the light of the preset color may include a meaning of outputting light of a color corresponding to color information associated with the peripheral environment (condition) detected through the sensing unit 160.

Light output from the plurality of light sources may be refracted while passing through a lens to pass through a light tunnel. In the light tunnel, one light may be transmitted, and at least two lights may be mixed (interfered). As at least two lights output from the plurality of light sources that output lights of different colors are mixed (interfered), lights of various colors may be output.

For example, if the detected peripheral environment corresponds to a first condition, and red information is associated with the first condition, the processor 170 may control the head lamp 155 to output a light source R that outputs light of red among a plurality of light sources R, G, and B that output lights of different colors.

Meanwhile, the head lamp (light module) of the present disclosure may further include a color filter formed to allow only light having a specific wavelength or light having a wavelength in a specific range to be transmitted therethrough.

Here, the color filter may be provided in plurality, and the plurality of color filters may allow light having different wavelengths or light having wavelengths in different ranges to be transmitted therethrough.

For example, as shown in (b) of FIG. 7A, the head lamp may include an R filter formed to allow only light based on red (R) to pass therethrough, a G filter formed to allow only light based on green (G) to pass therethrough, and a B filter formed to allow only light based on blue (B) to pass therethrough.

The color filter described in this specification may be an RGB color filter. In addition, a plurality of color filters may be provided in the head lamp (light module).

When a color filter (RGB color filter) is provided in the head lamp (light module), at least one light source may be a light source that emits light of white.

The processor 170 may output light of a preset color associated with a peripheral environment (condition) detected through the sensing unit 160, using the color filter.

For example, when light of red is to be output, the processor 170 may control the head lamp (light module) to output light of red by irradiating a light source formed to pass through the R filter among the plurality of light sources that output light of white.

However, the present disclosure is not limited thereto, and the processor 170 may control a color temperature of the light source provided in the head lamp. For example, the light source provided in the head lamp of the present disclosure may have a color temperature changed depending on a change in electrical signal. For example, the processor 170 may control the color temperature of the light source (or the color temperature of a light output from the light source) by adjusting a current applied to the light source.

Referring to FIG. 7D, a color temperature may be understood as a numerical value used to represent the chromaticity of a light source that has black body radiation or spectral distribution close thereto.

As the color temperature increases, light has a color of blue. As the color temperature decreases, light has a color of red.

The processor 170 may output light of a preset color associated with a peripheral environment (condition) detected through the sensing unit 160 by controlling the color temperature of the light source provided in the head lamp. That is, the processor 170 may control the head lamp to output the light of the preset color by controlling (changing) the color temperature of the light source provided in the head lamp.

However, the present disclosure is not limited thereto, and the head lamp (light module) of the present disclosure may further include a color temperature conversion filter. In this case, the processor 170 may change the color temperature of the light source, using the color temperature conversion filter.

In addition, when the light source of the present disclosure is a laser light source, the color of light may be determined (changed) by controlling a fluorescent body.

Specifically, when the light source provided in the head lamp is a laser light source, the color of light may be changed by controlling a fluorescent body that changes the color of light emitted from the laser light source.

Hereinafter, for convenience of description, "that the processor 170 outputs light" and "that the head lamp is controlled such that the processor 170 outputs light" will be used together, and both should be understood as meanings identical or similar to each other.

In FIG. 7A, the case where the light source (light emitting element) provided in the head lamp (light module) is an LED has been described as an example, but the present disclosure is not limited thereto.

The head lamp (light module) of the present disclosure may include various light sources such as a laser diode (LD), an organic light emitting diode (OLED), and a full color-light emitting diode (F-LED).

FIG. 7B illustrates an example in which the light source (light emitting element) included in the head lamp (light module) is an LD.

As shown in (a) of FIG. 7B, the head lamp (light module) of the present disclosure may include an RGB laser light source (laser diode). When the light source is a laser, the head lamp (light module) may further include at least two mirrors and a transmissive fluorescent body. The transmissive fluorescent body may be disposed between the at least two mirrors.

Meanwhile, the head lamp (light module) may include only a blue laser light source.

In this case, as shown in (b) of FIG. 7B, the head lamp (light module) may further include a color filter.

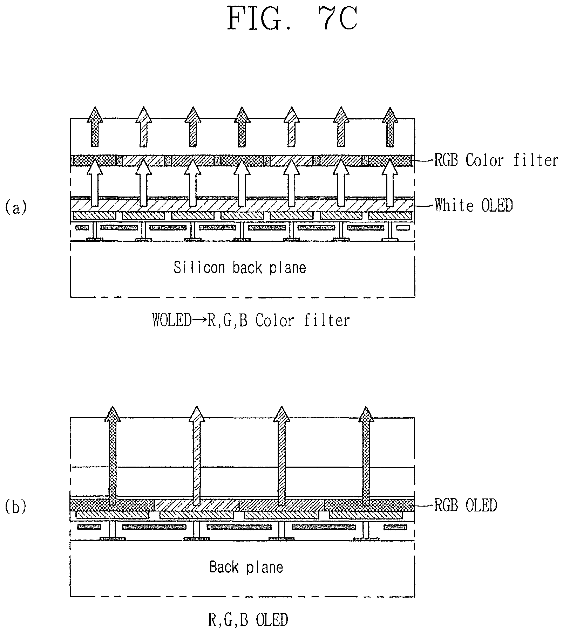

FIG. 7C illustrates an example in which the light source (light emitting element) included in the head lamp (light module) is an OLED.

When the light source of the present disclosure is the OLED, both a white OLED (WOLED) and an RGB OLED may be used.

For example, as shown in (a) of FIG. 7C, the WOLED may include a WOLED that outputs light of white and a color filter.

In addition, as shown in (b) of FIG. 7C, the RGB OLED may include a red OLED, a green OLED, and a blue OLED.

Although not shown in these figures, the F-LED may be provided with color filters to output lights of various colors.

The various light sources described in FIGS. 7A to 7D may be applied in various manners to at least one of the structures of the head lamp, described in FIGS. 6B to 6F.

That is, the present disclosure may provide a head lamp that can output light of at least one of a plurality of colors by combining the structures of the head lamp (light module), described in FIGS. 6B to 6F, and the various light sources described in FIGS. 7A to 7D.

Hereinafter, a method for controlling the control device 100 according to the exemplary embodiment, which may include at least one of the above-described components, will be described in more detail with respect to the accompanying drawings.

FIG. 8 is a flowchart illustrating a representative control method of the present disclosure.

Referring to FIG. 8, in the present disclosure, a peripheral environment of the vehicle 700 is first detected using the sensing unit 160 (S810).

Specifically, the sensing unit 160 may detect a peripheral environment of the vehicle 700. The detecting of the peripheral environment may include a meaning that the sensing unit 160 receives (acquires, senses, extracts, detects, decides, or determines) information related to the peripheral environment of the vehicle.

For example, the sensing unit 160 may sense a kind of a road surface (road, ground) on which the vehicle 700 is located, a weather state, information related to a line indicated on the road surface (e.g., a color of the line, a kind of the line, etc.), a kind of a peripheral light source existing at the outside of the vehicle.

In addition, the sensing unit 160 may sense a situation in the vehicle 700. For example, the sensing unit 160 may sense a race of a driver driving the vehicle (e.g., whether the driver is an Asian or Westerner) and whether a user input has been received (or whether a user request has been received).

That is, the detecting of the peripheral environment of the vehicle described in this specification may include a meaning of detecting not only an external environment (state, condition) of the vehicle 700 but also an internal environment (state, condition) of the vehicle 700.

An operation of detecting the peripheral environment of the vehicle may be performed by combining one or two or more of various sensors described above, such as a camera included in the sensing unit 160, a laser sensor, a radar, a lidar, and an ultrasonic sensor.

The sensing unit 160 of the present disclosure, as described above, may be the sensing unit 760 provided in the vehicle or may be a separate sensing unit.

After that, in the present disclosure, the head lamp is controlled to output light of a preset color, based on the detected peripheral environment (S820).

Specifically, the processor 170 may control the head lamp 155 to irradiate light of a color corresponding to color information associated with the peripheral environment detected through the sensing unit 160 among a plurality of colors that can be output from the head lamp 155.

As an example, color information may be associated for each peripheral environment (condition) in the memory 140 included in the control device 100 of the present disclosure. At least one (or a plurality of) peripheral environment (condition) associated with the color information may be stored in the memory 140.

That the processor 170 outputs light of a preset color may include a meaning of outputting light of a color corresponding to the color information associated with the peripheral environment (condition) detected through the sensing unit 160.

In this specification, for convenience of illustration, "light of a color corresponding to the color information associated with the peripheral environment (condition)" will be described as light of a color associated with the peripheral environment.

For example, when detected peripheral environments are different, and color information associated with the respective peripheral environments are different, the processor 170 may control the head lamp 155 to irradiate lights of different colors.

Here, the head lamp 155 may include at least one of a plurality of light sources that output lights of different colors and a color filter formed to allow only light having a specific wavelength or light having a wavelength in a specific range to be transmitted therethrough.

In the step (S820) of controlling the head lamp, the processor 170 may output the light of the preset color associated with the peripheral environment (condition), using at least one of the plurality of light sources and the color filter, which are provided in the head lamp.

Also, in the step (S820) of controlling the head lamp, the processor 170 may output the light of the preset color associated with the peripheral environment (condition) by controlling the color temperature of a light source provided in the head lamp.

The processor 170 may output the light of the preset color by emitting at least one of the plurality of light sources that output lights of different colors.

Also, the processor 170 may output the light of the preset color by emitting a light source formed to pass through a color filter that allows only the light of the preset light to be transmitted therethrough, among a plurality of light sources that output light of white.

Also, the processor 170 may change a color temperature by changing an electrical signal applied to at least one of an RGB light source or white light source. The processor 170 may output the light of the preset color through the change in electrical signal.

Also, the processor 170 may output the light of the preset color, using a color temperature conversion filter provided in the head lamp 155 (light module).

In the step (S820) of controlling the head lamp, if the peripheral environment detected through the sensing unit 160 corresponds to a first condition, the processor 170 may control the head lamp 155 to output light of a first color associated with the first condition. Also, if the detected peripheral environment corresponds to a second condition different from the first condition, the processor 170 may control the head lamp 155 to output light of a second color associated with the second condition.

Here, the first color and the second color may be colors different from each other. For example, when color information associated with the first condition and color information associated with the second condition are different from each other, the first color and the second color may be colors different from each other.

As another example, when the color information associated with the first condition and the color information associated with the second condition are the same even though the first condition and the second condition are different from each other, the first color and the second color are the same color.

The processor 170 may control the head lamp 155 to output the light of the first color or the light of the second color by using at least one of the plurality of light sources and the color filter, which are provided in the head lamp, or by controlling the color temperature of the light source.

Hereinafter, various exemplary embodiments of outputting lights of different colors according to peripheral environments (conditions) of the vehicle will be described in more detail with reference to the accompanying drawings.

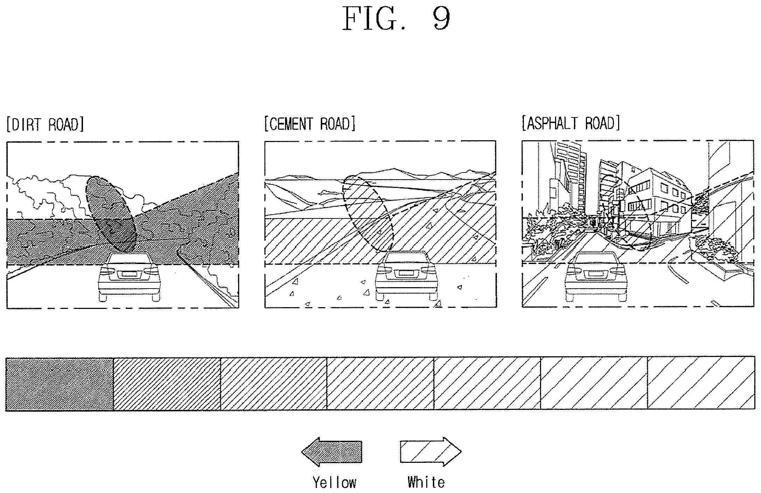

FIGS. 9 to 15 are conceptual views illustrating methods method for controlling the head lamp according to various exemplary embodiments.

Referring to FIG. 9, the present disclosure may change the color of light, based on a kind of a road surface.

The processor 170 may output lights of different colors, based on a kind of a road surface onto which light is irradiated, which is detected through the sensing unit 160.

Specifically, if the kind of the road surface is detected as a first kind, the processor 170 may control the head lamp 155 to output light of a first color associated with the first kind.

In addition, if the kind of the road surface is detected as a second kind different from the first kind, the processor 170 may control the head lamp 155 to output light of a second color associated with the second kind.

For example, referring to FIG. 9, when the detected kind of the road surface is a dirt road, the processor 170 may control the head lamp 155 to output light of a first color (e.g., light based on yellow).

In addition, when the detected kind of the road surface is a cement road, the processor 170 may control the head lamp 155 to output light of a second color different from the first color (e.g., light based on white).

In addition, when the kind of the road surface, which is detected through the sensing unit 160, is an asphalt road, the processor 170 may control the head lamp 155 to output light of a third color different from the first color and the second color (e.g., light based on blue).

Hereinafter, it is assumed that different color information are associated for every condition.

However, it should be noted that, when the same color information is associated for every condition, a case where light of the same color is output even when conditions are different may occur.

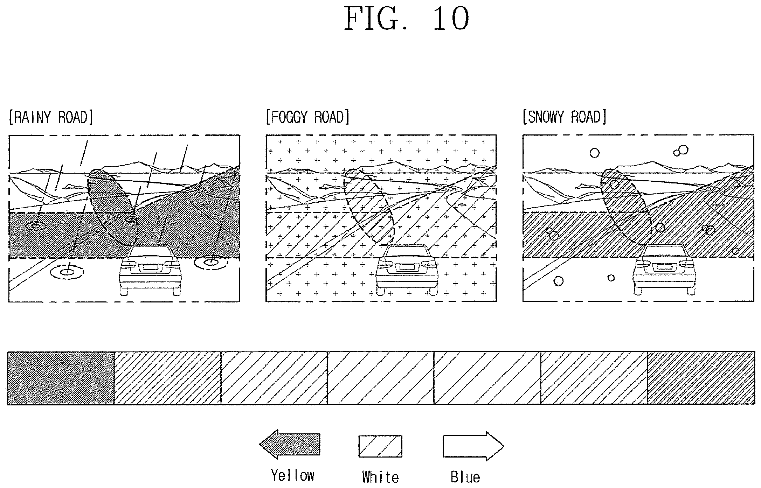

Referring to FIG. 10, the present disclosure may change the color of light, based on a weather state.

The processor 170 may detect a weather state through the sensing unit 160. The technique of detecting a weather state through the sensing unit 160 is a general technique, and therefore, a detailed description will be omitted.

The processor 170 may determine a color of light output from the head lamp 155, based on the detected weather state.

For example, referring to FIG. 10, color information may be associated for every condition such that light of a first color is output in a rainy weather, such that light of a second color different from the first color is output in a foggy weather, and such that light of a third color different from the first and second colors is output in a snowy weather.

The processor 170 may determine a color of light output from the head lamp 155 according to the weather state, based on the color information associated for every condition.

After that, the processor 170 may control the head lamp 155 to output light of the determined color.

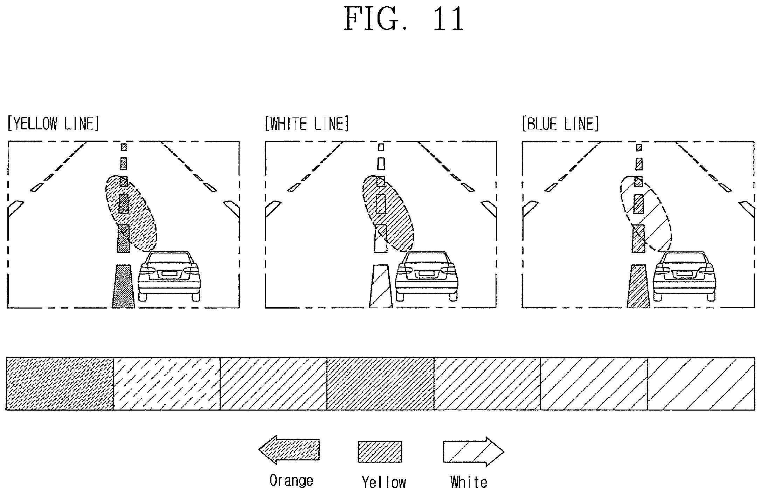

Referring to FIG. 11, a line of the present disclosure may mean a line drawn on a road surface so as to divide the road surface into runways (or lanes) of vehicles. Here, the line may be named as a vehicle traveling division line.

The processor 170 may detect a color of a line detected on a road surface on which the vehicle 700 travels through the sensing unit 160.

After that, the processor 170 may control the head lamp 155 to output lights of different colors, based on the color of the line detect on the road surface on which the vehicle 700 travels.

For example, referring to FIG. 11, if the color of the line detected on the road surface on which the vehicle 700 travels is yellow, the processor 170 may control the head lamp 155 to output light of a first color (e.g., light based on yellow).

In addition, if the color of the line detected on the road surface on which the vehicle 700 travels is white, the controller 170 may control the head lamp 155 to output light of a second color (e.g., light based on white).

In addition, if the color of the line detected on the road surface on which the vehicle 700 travels is blue, the controller 170 may control the head lamp 155 to output light of a third color (e.g., light based on blue).

As an example, the controller 170 may control the head lamp 155 to output light of a color corresponding to the color of the detected line.

In this case, the controller 170 may control the head lamp 155 to output light of a color corresponding to the color of the line, using a plurality of light sources that output lights of different colors and a color filter, which are provided in the head lamp 155 (light module). Also, the processor 170 may control the head lamp 155 to output light of a color corresponding to the color of the line by controlling the color temperature of a light source provided in the head lamp 155 (light module).

Meanwhile, in the present disclosure, a plurality of light modules may be provided (included) in the head lamp 155. Here, the light module may be a light module described in FIGS. 6A to 7D.

For example, as shown in FIG. 12, the head lamp 155 may include a left head lamp 155L and a right head lamp 155R.

A plurality of light modules 1210, 1220, 1230, and 1240 may be provided in the left head lamp 155L and the right head lamp 155R.

Hereinafter, for convenience of illustration, the plurality of light modules will be described as a first light module 1210, a second light module 1220, a third light module 1230, and a fourth light module 1240.

Referring to FIG. 12, the processor 170 may determine colors of lights output from the plurality of light modules 1210, 1220, 1230, and 1240, based on conditions detected in regions 1211, 1221, 1231, and 1241 onto which the light output from the plurality of light modules 1210, 1220, 1230, and 1240 are irradiated.

For example, the first light module 1210 may irradiate light onto a first region 1211, and the second light module 1220 may irradiate light onto a second region 1221. In addition, the third light module 1230 may irradiate light onto a third region 1231, and the fourth light module 1240 may irradiate light onto a fourth region 1241.

The processor 170 may detect conditions (peripheral environments) in the first to fourth regions, using the sensing unit 160.

If different conditions are detected from the regions 1211, 1221, 1231, and 1241, the processor 170 may control the head lamp 155 such that the plurality of light modules 1210, 1220, 1230, and 1240 output lights of different colors.

The processor 170 may determine, in various manners, a condition detected in each region. For example, a plurality of conditions may be detected in any one region among the plurality of regions (first to fourth regions).

In this case, the processor 170 may determine a condition detected in the corresponding region, based on a priority order provided to each condition.

As another example, the processor 170 may determine a condition in which an area satisfying a corresponding condition among a plurality of conditions detected in any one region is widest as a condition detected in the corresponding region.

In addition, when a plurality of conditions are detected in any one region, a method for setting any one condition may be variously designed/changed by a setting of a user or control of the processor.

If different conditions are detected (determined) in the regions 1211, 1221, 1231, and 1241 in this manner, the processor 170 may control the head lamp 155 such that the plurality of light modules output lights of different colors.

Specifically, if a first condition is detected in the first region 1211 among the regions, the processor 170 may control the light module 1210 irradiating light onto the first region 1211 among the plurality of light modules to output light of a first color associated with the first condition.

In addition, if a second condition different from the first condition is detected in the second region 1221 different from the first region 1211 among the regions, the processor 170 may control the light module 1220 irradiating light onto the second region 1221 among the plurality of light modules to output light of a second color associated with the second condition.

For example, referring to FIG. 12, when the first condition detected (determined) in the first region 1211 onto which the first light module 1210 irradiates light is determined as a dirt road, the processor 170 may control the first light module 1210 to irradiate the light of the first color (e.g., light based on yellow) associated with the first condition.

In addition, when the second condition detected (determined) in the second region 1221 onto which the second light module 1220 irradiates light is determined as a white line, the processor 170 may control the second light module 1220 to irradiate the light of the second color (e.g., light based on white) associated with the second condition.

In the case of the third and fourth light modules 1230 and 1240, a color of light may be determined by the above-described method, and the light of the determined color may be output.

In FIG. 12, a case where a plurality of light modules irradiate light onto different regions has been described as an example. However, the present disclosure is not limited thereto, and at least portions of the regions onto which the plurality of light modules irradiate light may overlap with each other.

For example, at least a portion of the first region onto which the first light module irradiates light may overlap with the second region onto which the second light module irradiates light.

In addition, at least a portion of the second region onto which the second light module irradiates light may overlap with the first and third regions onto which the first and third light modules irradiate light.

When at least portions of a plurality of regions onto which a plurality of light modules irradiate light overlap with each other, the processor 170 may irradiate light in a gradation form through brightness or selective on/off of the plurality of light modules.

In FIG. 12, a case where a plurality of light modules irradiate light of one color has been described as an example.

Meanwhile, in the present disclosure, a plurality of light source (light emitting elements) may be included in each of the plurality of light module (or the head lamp 155). As an example, the plurality of light sources may be matrix light sources formed in a matrix form or micro light sources having a size of a micro unit. In addition, the plurality of light sources may be micro matrix light sources in which a plurality of light sources having a size of a micro unit are formed in a matrix form.

The processor 170 may individually control the plurality of light sources. The processor 170 may selectively turn on/off the plurality of light sources, or may selectively change a color.

Referring to FIG. 13, when different conditions are detected in a region onto which light output from the head lamp 155 is irradiated, the processor 170 may control the head lamp 155 to irradiate lights of colors corresponding to (associated with) the respective conditions onto regions 1300a, 1300b, 1300c, 1300d, and 1300e in which the respective conditions are detected.

For example, a plurality of conditions may be detected in the region 1300 onto which light is irradiated from the head lamp 155. Here, the plurality of conditions may be different from one another.

In addition, color information associated with the plurality of conditions may be different from one another.

In this case, the processor 170 may determine a color of light to be irradiated by each of the plurality of light sources by individually controlling the plurality of light sources provided in the head lamp 155.

For example, the processor 170 may control a first light source(s) that irradiates light onto a region 1300a in which a first condition is detected among the plurality of light sources to output light of a color associated with the first condition.

In addition, the processor 170 may control a second light source(s) that irradiates light onto a region 1300b in which a second condition is detected among the plurality of light sources to output light of a color associated with the second condition.

As an example, when a kind of a lane (first condition) and a color of a line (second condition) are detected in a region onto which light is irradiated, and colors associated with the kind of lane and the color of the line are different from each other, the processor 170 may irradiate light of a first color associated with the first condition onto a lane 1300d, and irradiate light of a second color associated with the second color onto a line 1300e.

Here, when color information associated with the first condition and the color information associated with the second condition are different from each other, the first color and the second color may be different from each other.

The present disclosure may provide a method for controlling the head lamp, in which, for conditions respectively detected in regions onto which light is irradiated from the head lamp through individual control (individual color change) of a plurality of light sources, light of an optimized color can be irradiated for each region in which each condition is detected.

In addition, the present disclosure may change a color of light depending on a kind of a peripheral light source.

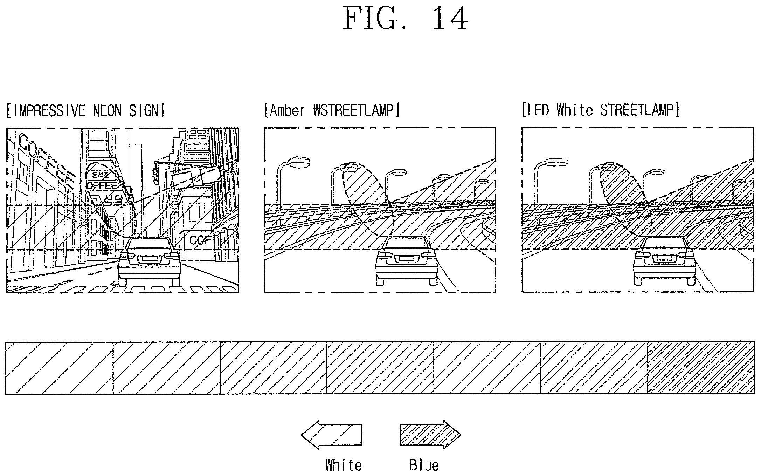

Referring to FIG. 14, the processor 170 may detect a kind of a light source existing around the vehicle through the sensing unit 160.

For example, the sensing unit 160 may detect a kind of a light source existing around the vehicle, based on detection of infrared light, generation of a flicker signal, and the like. If the infrared light is detected and the flicker signal is generated, the sensing unit 160 (or the processor 170) may determine (decide, sense, detect) the kind of the light source as a light bulb (incandescent lamp). If the infrared light is detected and the flicker signal is not generated, the sensing unit 160 (or the processor 170) may determine (decide, sense, detect) the kind of the light source as the sun (or moon). If the infrared light is not detected and the flicker signal is generated, the sensing unit 160 (or the processor 170) may determine (decide, sense, detect) the kind of the light source as a fluorescent lamp.

As another example, the sensing unit 160 (or the processor 170) may detect a color of the peripheral light source and determine a kind of the peripheral light source, based on the detected result.

As another example, the sensing unit 160 (or the processor 170) may detect at least one of the frequency, wavelength, and electrical energy of light received from the peripheral light source, and determine a kind of the peripheral light source, based on the detected result.

As another example, the sensing unit 160 (or the processor 170) may determine a kind of a peripheral light source, based on at least one of the electric field and magnetic field of light received from the peripheral light source.

The technique of determining a kind of the peripheral light source is a general technique, and therefore, a detailed description will be omitted.

The processor 170 may determine a color of light output from the head lamp 155, based on the detected kind of the light source.

As an example, as shown in FIG. 14, if the kind of the light source, detected through the sensing unit 160, is a first kind, the processor 170 may control the head lamp 155 to output light of a first color associated with the first kind.

As another example, if the kind of the light source, detected through the sensing unit 160, is a second kind different from the first kind, the processor 170 may control the head lamp 155 to output light of a second color associated with the second kind.

When color information associated with the first kind and color information associated with the second kind are different from each other, the first color and the second color may be colors different from each other.

In addition, the processor 170 may control the head lamp 155 to output lights of different colors, based on a brightness around the vehicle, detected through the sensing unit 160.

For example, if the brightness around the vehicle is a first brightness, the processor 170 may control the head lamp 155 to output light of a first color associated with (corresponding to) the first brightness. If the brightness around the vehicle is a second brightness, the processor 170 may control the head lamp 155 to output light of a second color associated with the second brightness.

In addition, the present disclosure may change a color of light irradiated from the head lamp according to a user request.

The processor 170 may change a color of light, based on a user request.

Here, the user request may include a user input received through the input unit, the output unit, or the display device, which is provided in the vehicle.

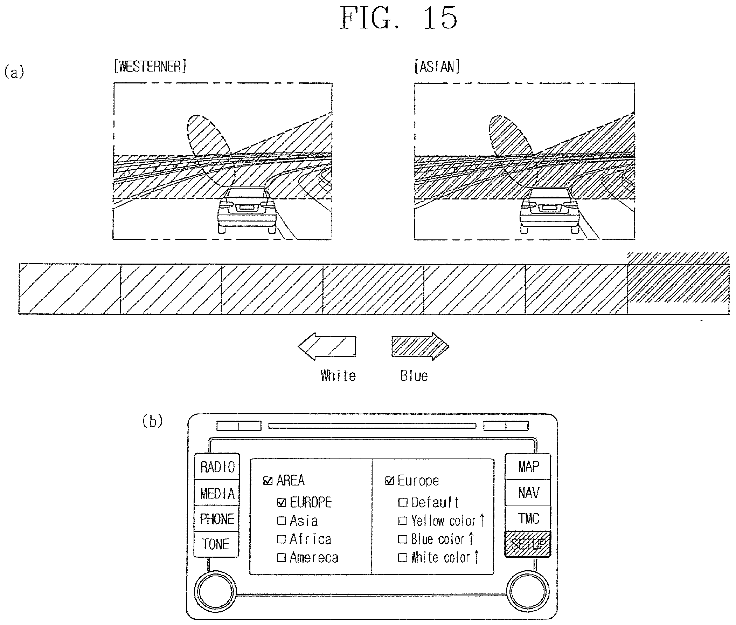

Referring to (b) of FIG. 15, a menu screen capable of selecting a race of a driver and a menu screen capable of adjusting a color for each race may be output on the display unit (741 or 151) or the display device 400, which is provided in the vehicle 700 of the present disclosure.

If a user input is received through the menu screen, the processor 170 may control the head lamp 155 to output light of a color corresponding to the received user input.

Although not shown in FIG. 15, a menu (e.g., a color spectrum) capable of immediately setting a color may be output on the display unit or the display device. After that, the processor 170 may determine a color of light to be output by the head lamp through the output menu.

The present disclosure is not limited thereto, and the sensing unit 160 of the present disclosure may detect a race of a driver. For example, the sensing unit 160 may detect a race of a driver, based on an image received through a camera provided inside the vehicle.

After that, the processor 170 may control the head lamp 155 to output light of a color associated with the detected race of the driver.

As an example, as shown in (a) of FIG. 15, if the race of the driver is determined as a Westerner, the processor 170 may control the head lamp to output light of a first color (e.g., light based on yellow). If the race of the driver is determined as an Asian, the processor 170 may control the head lamp to output light of a second color (e.g., light based on blue).

As another example, the processor 170 may recognize an iris of the driver, based on the image received through the camera, and determine (decide, extract, sense, detect) a color of the iris. After that, the processor 170 may control the head lamp to output lights of different colors, based on the determined color of the iris. For example, the processor 170 may control the head lamp to output light of a color (e.g., a complementary color) contrary to the color of the iris.

Color information associated with each condition (or a color of light output for each condition) may be determined by a user setting, may be provided in the vehicle or the control device from when a product is released, may be received from an external device, or may be determined under control of the controller (or the processor).

In the above, that the processor 170 irradiates light may mean that the processor 170 controls the head lamp 155 to irradiate light.

In addition, a change in color of light output from the head lamp may be performed through a combination of at least one or two or more among a plurality of light sources outputting different colors, a light tunnel, a phosphor, a color filter, a color temperature conversion filter, and color temperature control of the light source.

The control device 100 described above may be included in the vehicle 700.

In addition, the operation or control method of the control device 100 described above may be identically/similarly analogized and applied as that of the vehicle 700.

For example, the control method of the vehicle (or the control method of the control device) may include a step of detecting a peripheral environment of the vehicle and a step of controlling the head lamp to output light of a preset color, based on the detected peripheral environment.

In addition, the head lamp may include at least one of a plurality of light sources outputting different colors and a color filter formed to allow only light having a specific wavelength or light having a wavelength in a specific range to be transmitted therethrough.

In the step of controlling the head lamp, at least one of the plurality of light sources and the color filter, provided in the head lamp, may be used based on the detected peripheral environment, or the light of the preset color may be output by controlling the color temperature of a light source provided in the head lamp.

Also, in the step of controlling the head lamp, if the detected peripheral environment corresponds to a first condition, the head lamp may be controlled to output light of a first color associated with the first condition. If the detected peripheral environment corresponds to a second condition different from the first condition, the head lamp may be controlled to output light of a second color associated with the second condition.

The present disclosure has advantages as follows.

First, the present disclosure can provide a control device and a vehicle having the same, which can output light of a color optimized based on a peripheral environment detected around the vehicle.

Second, the present disclosure can provide a head lamp capable of outputting lights of various colors.

Third, the present disclosure can provide a new user interface which can remarkably improve visibility of a driver by outputting light of a color associated with a detected peripheral environment (condition).

Advantages of the present disclosure are not limited to the aforementioned advantages, and those skilled in the art may evidently understand other advantages that have not been mentioned above from the description of the appended claims.

The above-described steps and all functions/operations described in this specification may be performed by not only the control device 100 but also the controller 770 provided in the vehicle 700.

In addition, all functions, configurations, or control methods, which the control device 100 performs, may be performed by the controller 770 provided in the vehicle 700. That is, all control methods described in this specification may be applied a control method of the vehicle, and may be applied a control method of the control device.

The foregoing present invention may be implemented as codes readable by a computer on a medium written by the program. The computer-readable media may include all kinds of recording devices in which data readable by a computer system is stored. Examples of the computer-readable media may include hard disk drive (HDD), solid state disk (SSD), silicon disk drive (SDD), ROM, RAM, CD-ROM, magnetic tape, floppy disk, and optical data storage device, and the like, and also include a device implemented in the form of a carrier wave (for example, transmission via the Internet). In addition, the computer may include the processor 170 of the control device 100 or the controller 770 of the vehicle. Accordingly, the detailed description thereof should not be construed as restrictive in all aspects but considered as illustrative. The scope of the invention should be determined by reasonable interpretation of the appended claims and all changes that come within the equivalent scope of the invention are included in the scope of the invention.

## Claims

1. A control device, comprising:
a sensing unit configured to detect a peripheral environment of a vehicle;
a head lamp formed to output light of at least one color among a plurality of colors; and
a processor configured to control the head lamp to output light of a preset color, based on the peripheral environment detected through the sensing unit.

2. The control device of claim 1, wherein the head lamp includes a plurality of light sources,
wherein the plurality of light sources are designed to output light of colors different from one another,
wherein the processor is configured to control at least one of the plurality of light sources to output the light of the preset color, based on the detected peripheral environment.

3. The control device of any one of claims 1 and 2, wherein the head lamp further includes a color filter formed to allow only light having a specific wavelength or light having a wavelength in a specific range to be transmitted therethrough,
wherein the processor is configured to output the light of the preset color using the color filter.

4. The control device of any one of claims 1 to 3, wherein the processor is configured to output the light of the preset color by controlling the color temperature of a light source provided in the head lamp.

5. The control device of any one of claims 1 to 4, wherein the processor is configured to:
if the peripheral environment detected through the sensing unit corresponds to a first condition, control the head lamp to output light of a first color associated with the first condition; and
if the peripheral environment detected through the sensing unit corresponds to a second condition different from the first condition, control the head lamp to output light of a second color associated with the second condition.

6. The control device of claim 5, wherein the first color and the second color are colors different from each other,
wherein the processor is configured to output the light of the first color or the light of the second color by using at least one of the plurality of light sources and the color filter, which are provided in the head lamp, or by controlling the color temperature of the light source.

7. The control device of any one of claims 1 to 6, wherein the processor is configured to output light of different colors, based on a kind of a road surface onto which the light is irradiated, which is detected through the sensing unit.

8. The control device of claim 7, wherein the processor is configured to:
if the kind of the road surface is detected as a first kind, control the head lamp to output light of a first color associated with the first kind; and
if the kind of the road surface is detected as a second kind different from the first kind, control the head lamp to output light of a second color associated with the second kind.

9. The control device of any one of claims 1 to 8, wherein the processor is configured to detect a weather state through the sensing unit, and determine a color of light output from the head lamp, based on the weather state.

10. The control device of any one of claims 1 to 9, wherein the processor is configured to control the head lamp to output lights of different colors, based on a color of a line detected on a road surface on which the vehicle travels.

11. The control device of any one of claims 1 to 10, wherein the head lamp includes a plurality of light modules,
wherein the processor is configured to determine colors of light output from the plurality of light modules, based on conditions detected in regions onto which the light output from the plurality of light modules is irradiated.

12. The control device of claim 11, wherein the processor is configured to, if different conditions are detected in the regions, control the head lamp such that the plurality of light modules output light of different colors.

13. The control device of claim 12, wherein the processor is configured to:
if a first condition is detected in a first region among the regions, control a light module irradiating light onto the first region among the plurality of light modules to output light of a first color associated with the first condition; and
if a second condition different from the first condition is detected in a second region different the first region among the regions, control a light module irradiating light onto the second region among the plurality of light modules to output light of a second color associated with the second condition.

14. The control device of any one of claims 1 to 13, wherein the processor is configured to, when different conditions are detected in a region onto which the light output from the head lamp is irradiated, control the head lamp such that light of colors corresponding to the conditions is irradiated onto regions in which the conditions are detected, respectively.

15. The control device of any one of claims 1 to 14, wherein the processor is configured to:
detect a kind of a light source existing around the vehicle through the sensing unit; and
determine a color of the light output from the head lamp, based on the detected kind of the light source.
